(19) Europäisches Patentamt
European Patent Office
Office européen des brevets

(11) EP 4 534 628 A1

(12) **EUROPEAN PATENT APPLICATION**
published in accordance with Art. 153(4) EPC

(43) Date of publication:
**09.04.2025 Bulletin 2025/15**

(21) Application number: **23816056.8**

(22) Date of filing: **30.05.2023**

(51) International Patent Classification (IPC):
***C09K 21/00*** (2006.01) ***A62C 3/16*** (2006.01)
***A62D 1/00*** (2006.01) ***A62D 1/06*** (2006.01)
***B32B 27/18*** (2006.01) ***C09D 5/18*** (2006.01)
***C09D 7/60*** (2018.01) ***C09D 7/63*** (2018.01)
***C09D 129/04*** (2006.01) ***C09D 129/14*** (2006.01)
***C09D 201/00*** (2006.01)

(52) Cooperative Patent Classification (CPC):
**A62C 3/16; A62D 1/00; A62D 1/06; B32B 27/18; C09D 5/18; C09D 7/60; C09D 7/63; C09D 129/04; C09D 129/14; C09D 201/00; C09K 21/00**

(86) International application number:
**PCT/JP2023/020107**

(87) International publication number:
**WO 2023/234299 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.06.2022 JP 2022089732**
**21.06.2022 JP 2022099880**
**15.07.2022 JP 2022113814**

(71) Applicant: **Toppan Holdings Inc.**
**Tokyo 110-0016 (JP)**

(72) Inventors:
- **HONJO Yusaku**
  **Tokyo 110-0016 (JP)**
- **KUROKAWA Masato**
  **Tokyo 110-0016 (JP)**
- **SHIINE Yasuharu**
  **Tokyo 110-0016 (JP)**
- **TANABE Junya**
  **Tokyo 110-0016 (JP)**
- **KAKEGAWA Shunta**
  **Tokyo 110-0016 (JP)**

(74) Representative: **Hoffmann Eitle**
**Patent- und Rechtsanwälte PartmbB**
**Arabellastraße 30**
**81925 München (DE)**

(54) **COMPOSITION FOR FIRE-EXTINGUISHING MATERIAL, PRODUCTION METHOD THEREFOR, METHOD FOR SELECTING BINDER RESIN, FIRE-EXTINGUISHING MATERIAL, FIRE-EXTINGUISHING MATERIAL SHEET, AND DEVICE HAVING AUTOMATIC FIRE-EXTINGUISHING FUNCTION**

(57) A fire-extinguishing material composition according to the present disclosure contains: a fire-extinguishing agent containing at least one salt of a deliquescent organic salt or inorganic salt; and a compound having an acid anhydride group. A fire-extinguishing material according to the present disclosure is formed from the fire-extinguishing material composition.

FIG.1

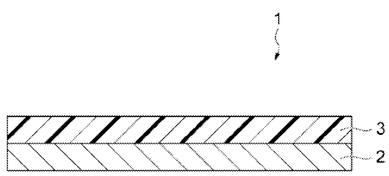


EP 4 534 628 A1

## Description

[Technical Field]

The present disclosure relates to a fire-extinguishing material composition and a method for producing the fire-extinguishing material composition, a method for selecting a binder resin, a fire-extinguishing material, a fire-extinguishing material sheet, and a device having an auto fire-extinguishing function.

[Background Art]

There are conventionally known self-extinguishing molded articles for extinguishing and suppress a fire. For example, a self-extinguishing molded article disclosed in Patent Literature 1 includes a fire-extinguishing agent composition that generates an aerosol during combustion to extinguish and suppress a fire, and the self-extinguishing molded article can exercise a self-extinguishing function by generating, through thermal energy of a fire, a chemical species having a fire-extinguishing function. The self-extinguishing molded article is formed in the shape of, for example, a sheet. An aerosol fire-extinguishing agent composition disclosed in Patent Literature 2 automatically ignites and undergoes combustion in response to heat caused by a fire, and can thus generate an aerosol having a fire-extinguishing action. These molded article and composition do not require the use of a fire extinguisher, a fire-extinguishing device, or the like to extinguish a fire.

While our lives recently get more and more comfortable along with the advance of technologies, a large amount of energy is required to generate such comfort, and high safety is required in situations such as charging and storing the energy at high density, moving the energy, and using the energy.

In the cases of, for example, vehicles, there are risks of ignition and fire at situations of extracting a fossil fuel represented by gasoline, a situation of refining a fossil fuel into gasoline, a transporting situation, and the like. Similarly in the cases of, for example, electronics, there are risks of ignition and fire when transmitting electrical energy through electric wires, when adjusting electrical energy at an electric power substation or through an electric transformer, when using electrical energy with electric appliances at home or in factories, when temporarily storing electrical energy in a rechargeable battery, and the like.

To deal with the problems of ignition and fire, Patent Literature 3 proposes a fire-extinguishing liquid and a fire extinguisher, Patent Literature 4 proposes an auto fire-extinguishing device dropped from a helicopter, Patent Literature 5 proposes an aerosol fire-extinguishing device, and Patent Literature 6 proposes the use of a fire-extinguishing sheet containing a fire-extinguishing agent.

[Citation List]

[Patent Literatures]

[PTL 1] WO 2018/047762 A

[PTL 2] JP 6443882 B

[PTL 3] JP H09-276440 A

[PTL 4] JP 2015-6302 A

[PTL 5] JP 2017-080023 A

[PTL 6] JP 2020-81809 A


[Summary of the Invention]

[Technical Problems]

(First object)

Fire-extinguishing agent compositions described in Patent Literatures 1 and 2 contain a salt such as potassium

nitrate and sodium nitrate. These salts are deliquescent, and therefore, there is room for improvement to stably maintain the properties of a self-extinguishing molded article over a long period.

The present disclosure has been made in view of the circumstances described above, and a first object is to provide a fire-extinguishing material composition (hereinafter, sometimes also called a "fire-extinguishing agent composition) that can provide a fire-extinguishing material having excellent stability of properties, and to provide a fire-extinguishing material formed from the composition.

(Second object)

All the techniques described in Patent Literatures 3 to 6 propose a method for dealing with a fire having continued for a certain time. On the other hand, from the viewpoint of minimizing damage caused by a fire, some fire-extinguishing work (initial fire extinguishing) is desired to be performed as soon as possible after ignition. For such fire-extinguishing work, there is, for example, a method for placing in advance fire-extinguishing agent components themselves around an object that may possibly be ignited. Such a method is expected to complete fire extinguishing by the fire-extinguishing agent components before a person senses the ignition of the object. However, advance dispersion of a fire-extinguishing agent around an object is not realistic, and it is necessary to provide around an object the fire-extinguishing agent in a shape with appropriate handleability.

Patent Literature 6 proposes a fire-extinguishing sheet formed by mixing microcapsules having a fire-extinguishing agent sealed therein with an ink made from a water-soluble resin and a curing agent, kneading the mixture into fibers, and solidifying the fibers into a plate. However, according to the studies of the inventors of the present invention, the fire-extinguishing sheet is not reactive enough to occurrence of small fires that have started, and possibly may not react in some cases. Even when a part of the microcapsules is ruptured by heat from occurrence of a fire and the fire-extinguishing agent is discharged, it is assumed that the fire may not spread to the sheet and a sufficient amount of the fire-extinguishing agent is not discharged.

The present disclosure has been made in view of the circumstances described above, and a second object is to provide a fire-extinguishing material composition that can exhibit excellent fire-extinguishing ability in an initial ignition stage, and a method for producing the fire-extinguishing material composition, a fire-extinguishing material containing a fire-extinguishing material composition, and a device having an auto fire-extinguishing function, the device including the fire-extinguishing material, and a method for selecting a binder resin (hereinafter, sometimes also called a "binder") that can impart an excellent initial fire-extinguishing ability to a fire-extinguishing material.

(Third object)

A self-extinguishing molded article of Patent Literature 1 is in the shape of, for example, a sheet, and can be used by attaching to an object for attachment, such as a panel of a vehicle and a wall of a building. In view of such a use form, it is assumed that a self-extinguishing molded article may be attached to a curve, but Patent Literature 1 does not study anything about the characteristics necessary for the attachment to a curve. According to the studies of the inventors of the present invention, it has been found that when a fire-extinguishing agent composition formed into a sheet is subjected to a test of bending along a curve, the fire-extinguishing agent composition cannot fully follow the curve and sometimes suffers cracking (breakage).

Thus, a third object of the present disclosure is to provide a fire-extinguishing material sheet that has a fire-extinguishing function, and is less likely to undergo cracking in a fire-extinguishing material layer (hereinafter, sometimes also called a "fire-extinguishing agent layer") even when applied to a curve, and to provide a fire-extinguishing material composition appropriate for the fire-extinguishing material sheet.

[Solution to Problems]

(First aspect)

In order to achieve the first object, the present disclosure provides a fire-extinguishing material composition containing: a fire-extinguishing agent containing at least one salt of a deliquescent organic salt or inorganic salt; and a compound having an acid anhydride group. The fire-extinguishing material composition may further contain a binder resin and/or a liquid medium.

The inventors of the present invention have focused on a silane coupling agent as means for solving a problem attributed to deliquescent properties. That is, the inventors have considered that the object can be achieved by improving the density of film by a reaction between an organic functional group moiety of a silane coupling agent and a binder resin contained in a fire-extinguishing agent composition, and thus suppressing contact between a deliquescent salt and water. Therefore, the inventors have added a specific silane coupling agent into a fire-extinguishing agent composition, and, as

expected, obtained a fire-extinguishing material having excellent stability of properties. However, the studies conducted afterword have made it clear that the silane coupling agent used has an acid anhydride group and the acid anhydride group mainly contributes to the stability of properties of the fire-extinguishing material. As described above, the fire-extinguishing material composition can realize excellent stability of properties by containing a compound having an acid anhydride group and thus suppressing deliquescence of a salt.

The fire-extinguishing material composition may contain 10 to 250 parts by mass of the compound, with the mass of the binder resin set to 100 parts by mass. When the content of the compound is within the above range, the fire-extinguishing material composition can strongly suppress deliquescence of a salt, and can realize more excellent stability of properties.

From the viewpoint of fire-extinguishing performance, the fire-extinguishing material composition may contain 70 to 97 mass% of the fire-extinguishing agent on the basis of the total amount of the fire-extinguishing material composition. The salt may be a potassium salt. The acid anhydride group may be a carboxylic anhydride group. The compound may further have an alkoxysilyl group. The compound may be a silane coupling agent.

A fire-extinguishing material according to one aspect of the present disclosure is formed from the fire-extinguishing material composition.

(Second aspect)

In order to achieve the second object, one aspect of the present disclosure provides a fire-extinguishing material composition containing: a fire-extinguishing agent containing at least one salt of an organic salt or an inorganic salt; and a binder. This fire-extinguishing material composition satisfies the following requirements. That is, the binder has a weight reduction ratio up to a temperature of 400°C of 30% or more when heated from 30°C to 500°C at a temperature increase rate of 5°C/min in thermogravimetric measurement in an air atmosphere. Such a fire-extinguishing material composition has an excellent ability to extinguish a fire that has started.

One aspect of the present disclosure relates to a fire-extinguishing material composition containing: a fire-extinguishing agent containing at least one salt of an organic salt or an inorganic salt; a first binder, and a second binder. This fire-extinguishing material composition satisfies the following requirements. That is, the first binder has a weight reduction rate up to a temperature of 400°C of 50% or more when heated from 30°C to 500°C at a temperature increase rate of 5°C/min in thermogravimetric measurement in an air atmosphere. The second binder has a weight reduction tatio up to a temperature of 400°C of 15% or less when heated from 30°C to 500°C at a temperature increase rate of 5°C/min in thermogravimetric measurement in an air atmosphere. When the mass of the first binder is 100 parts, the mass of the second binder is 250 parts or less. This fire-extinguishing material composition has an excellent ability of extinguishing a fire that has started, and can obtain, depending on the type of the second binder, desired physical properties such as improvement of adhesion to a base material, improvement of processability, suppression of deliquescent properties, reduction of tackiness, and improvement of coatability in a roll to roll process.

The second binder may be a compound having an acid anhydride group. The second binder may be a silane coupling agent having a carboxylic anhydride group and an alkoxysilyl group. The fire-extinguishing material composition containing this second binder has an excellent ability to extinguish a fire that has started, and can suppress deliquescence of a salt.

One aspect of the present disclosure relates to a fire-extinguishing material containing the fire-extinguishing material composition described above. One aspect of the present disclosure relates to a device having an auto fire-extinguishing function, the device including the fire-extinguishing material.

One aspect of the present disclosure relates to a method for selecting a binder used for a fire-extinguishing material composition containing: a fire-extinguishing agent containing at least one salt of an organic salt or an inorganic salt; and a binder. This method includes: a step of heating a binder to be evaluated from 30°C to 500°C at a temperature increase rate of 5°C/min in thermogravimetric measurement in an air atmosphere, and measuring the weight reduction rate up to a temperature of 400°C of the binder; and a step of determining a binder having a weight reduction rate of 30% or more as capable of preparing a fire-extinguishing material composition that exerts good initial fire-extinguishing properties.

One aspect of the present disclosure relates to a method for producing a fire-extinguishing material composition. This production method includes: a step of preparing a binder determined, in the method for selecting a binder, as capable of preparing a fire-extinguishing material composition that exerts good initial fire-extinguishing properties; and a step of preparing a fire-extinguishing material composition containing the binder, and a fire-extinguishing agent containing at least one salt of an organic salt or an inorganic salt.

(Third aspect)

In order to achieve the third object, the present disclosure provides a fire-extinguishing material sheet including a

fire-extinguishing agent layer containing a fire-extinguishing agent, a binder resin, and an additive, wherein the proportion by weight of solid content of the fire-extinguishing agent to the total of the fire-extinguishing agent, the binder resin, and the additive is 60 wt% to 98 wt%.

This fire-extinguishing material sheet is less likely to undergo cracking in the fire-extinguishing agent layer even when applied in a curve, and the fire-extinguishing agent becomes in a state of exhibiting a fire-extinguishing function using the thermal energy of a fire.

The fire-extinguishing material sheet according to the present disclosure may include one or more of the features described below.

- The binder resin contains at least one of a polyvinyl acetal resin or a polyvinyl alcohol resin.
- The additive contains an epoxy compound, and this epoxy compound is bi- or more- functional.
- The fire-extinguishing agent contains a potassium salt.
- The fire-extinguishing agent layer has a thickness of 70 $\mu$m to 500 $\mu$m.
- The fire-extinguishing agent layer can be bent over a mandrel having a diameter of 18 mm or less.
- The fire-extinguishing material sheet includes a resin film on which the fire-extinguishing agent layer is stacked.

The present disclosure also provides a fire-extinguishing agent composition containing a fire-extinguishing agent, a binder resin, and an additive, wherein the proportion by weight of solid content of the fire-extinguishing agent to the total of the fire-extinguishing agent, the binder resin, and the additive is 60 wt% to 98 wt%, and when the fire-extinguishing agent composition is formed into a sheet, the mandrel diameter of the sheet is 18 mm or less.

[Advantageous Effects of the Invention]

(First effect)

The first aspect of the present disclosure can provide a fire-extinguishing material composition that can give a fire-extinguishing material having excellent stability of properties. The first aspect of the present disclosure can also provide a fire-extinguishing material formed from the composition.

(Second effect)

The second aspect of the present disclosure can provide a fire-extinguishing material composition that can exhibit an excellent fire-extinguishing ability in an initial ignition stage, and a method for producing the fire-extinguishing material composition, a fire-extinguishing material containing a fire-extinguishing material composition, and a device having an auto fire-extinguishing function, the device including the fire-extinguishing material. The second aspect of the present disclosure provides a method for selecting a binder that can impart an excellent initial fire-extinguishing ability to a fire-extinguishing material.

(Third effect)

The third aspect of the present disclosure can provide a fire-extinguishing material sheet that has a fire-extinguishing function, and is less likely to undergo cracking in a fire-extinguishing agent layer even when applied to a curve. The third aspect of the present disclosure can also provide a fire-extinguishing agent composition appropriate for the fire-extinguishing material sheet.

[Brief Description of the Drawings]

Fig. 1 is a cross-sectional view schematically illustrating one embodiment of a fire-extinguishing material according to the present disclosure.

Fig. 2 is a cross-sectional view of a fire-extinguishing material sheet according to the present disclosure.

Fig. 3 is a cross-sectional view of a fire-extinguishing material laminate according to the present disclosure.

[Description of the Embodiments]

Hereinafter, embodiments of the present disclosure are described in detail. However, the present disclosure is not limited to the following embodiments.

[Fire-extinguishing material composition according to first aspect]

A fire-extinguishing material composition according to the first aspect contains: a fire-extinguishing agent containing at least one salt of a deliquescent organic salt or inorganic salt; and a compound having an acid anhydride group. The fire-extinguishing material composition may further contain a binder resin and/or a liquid medium.

(Fire-extinguishing agent)

The fire-extinguishing agent contains at least one salt of a deliquescent organic salt or inorganic salt, and an oxidant. Examples of the deliquescent organic salt include a potassium salt, a sodium salt, and an ammonium salt. Among these examples, a potassium salt is preferably used as the organic salt. Examples of the organic potassium salt include potassium carboxylates such as potassium acetate, potassium citrate (mono-potassium citrate, di-potassium citrate, and tripotassium citrate), potassium tartrate, potassium lactate, potassium oxalate, and potassium maleate. Among these examples, potassium acetate or potassium citrate is preferably used from the viewpoint of usefulness of a negative catalysis effect on combustion.

Examples of the deliquescent inorganic salt include a potassium salt and a sodium salt. Among these examples, a potassium salt is preferably used as the inorganic salt. Examples of the inorganic potassium salt include potassium tetraborate, potassium carbonate, potassium hydrogen carbonate, potassium dihydrogen phosphate, and dipotassium hydrogen phosphate.

These organic salts and inorganic salts may be used singly or in combination of two or more thereof.

The organic salt and the inorganic salt may be particulate. The organic salt and the inorganic salt may have an average particle size D50 of 1 μm or more and 100 μm or less, or 3 μm or more and 40 μm or less. By having an average particle size D50 of more than or equal to the above lower limit, the organic salt and the inorganic salt are easily dispersed in a system. By the organic salt and the inorganic salt having an average particle size D50 of less than or equal to the above upper limit, the fire-extinguishing material composition improves stability when made into a coating solution, and smoothness of a coated surface tends to be improved. The average particle size D50 can be calculated by wet measurement using a laser diffraction particle size analyzer.

Examples of the oxidant include potassium chlorate, potassium nitrate, sodium nitrate, strontium nitrate, ammonium perchlorate, potassium perchlorate, basic copper nitrate, copper(I) oxide, copper(II) oxide, iron(II) oxide, iron(III) oxide, and molybdenum trioxide. Among these examples, potassium chlorate is preferably used.

The content of the fire-extinguishing agent contained in the fire-extinguishing material composition may be 70 to 97 mass% or 85 to 92 mass% on the basis of the total amount of the fire-extinguishing material composition. When the content of the fire-extinguishing agent is less than or equal to the above upper limit, the fire-extinguishing material composition easily suppresses deliquescence of a salt, and increases coatability, thus facilitating formation of a film. When the content of the fire-extinguishing agent is more than or equal to the above lower limit, the fire-extinguishing material composition easily exhibits sufficient fire-extinguishing performance.

(Compound having acid anhydride group)

By containing a compound having an acid anhydride group, the fire-extinguishing material composition enables a molded article to stably maintain the properties thereof over a long period. This reason is not clear, but it is presumed that the acid anhydride group can react with water and therefore traps water having entered through a barrier film, and thereby prevents deliquescence of a salt contained in a molded article. It is also presumed that the compound having an acid anhydride group modifies the surface of a salt and thus improves hydrophobicity, and thereby suppresses contact of the salt with water.

The compound having an acid anhydride group is not particularly limited as long as the compound has, in a molecule thereof, one or more acid anhydride groups formed by dehydration and condensation of two molecules of oxoacids. Examples of the oxoacids that form an acid anhydride group include a carboxylic acid, sulfuric acid, nitric acid, and phosphoric acid. Among these examples, the oxoacids that form an acid anhydride group are preferably carboxylic acids. Examples of a compound having a carboxylic anhydride group include simple carboxylic anhydrides such as phthalic anhydride, succinic anhydride, and maleic anhydride, and copolymers containing, as a monomer, a carboxylic

anhydride, such as maleic anhydride, having an unsaturated bond.

The compound having an acid anhydride group may further have an alkoxysilyl group in a molecule of the compound. When the compound contained in the fire-extinguishing material composition and having an acid anhydride group further has an alkoxysilyl group in a molecule of the compound, the fire-extinguishing material composition enables a molded article to more stably maintain the properties thereof over a long period. This reason for this is not clear, but it is presumed that an alkoxysilane is hydrolyzed and then undergoes a self-reaction to form a siloxane, thereby improving water resistance and the density of film and thus suppressing the contact between a deliquescent salt and water. As the compound having, in a molecule thereof, an acid anhydride group and an alkoxysilyl group, for example, a silane coupling agent may be used. The silane coupling agent used as the compound having an acid anhydride group may have a similar function to the binder resin in the fire-extinguishing material composition.

The content of the compound contained in the fire-extinguishing material composition and having an acid anhydride group may be 10 to 250 parts by mass or 50 to 200 parts by mass when the mass of the binder resin contained in the fire-extinguishing material composition is set to 100 parts by mass. When the content of the compound having an acid anhydride group is less than or equal to the above upper limit, the fire-extinguishing material composition not only increases coatability, thus facilitating formation of a film, but also can suppress cracking of the film. When the content of the compound having an acid anhydride group is more than or equal to the above lower limit, the fire-extinguishing material composition easily suppresses deliquescence of a salt and easily exerts sufficient fire-extinguishing performance.

(Binder resin)

As the binder resin, a thermoplastic resin and a thermosetting resin can be used. Examples of the thermoplastic resin include polyolefin resins such as a polyvinyl alcohol resin, a polypropylene resin, a polyethylene resin, a poly(1-) butene resin, and a polypentene resin, a polystyrene resin, an acrylonitrile-butadiene-styrene resin, a methyl methacrylate-butadiene-styrene resin, an ethylene-vinyl acetate resin, an ethylene-propylene resin, a polycarbonate resin, a polyphenylene ether resin, an acrylic resin, a polyamide resin, and a polyvinyl chloride resin. Examples of the thermosetting resin include rubbers such as a natural rubber (NR), an isoprene rubber (IR), a butadiene rubber (BR), a 1,2-polybutadiene rubber (1,2-BR), a styrene-butadiene rubber (SBR), a chloroprene rubber (CR), a nitrile rubber (NBR), a butyl rubber (IIR), an ethylene-propylene rubber (EPR, EPDM), a chlorosulfonated polyethylene (CSM), an acrylic rubber (ACM, ANM), an epichlorohydrin rubber (CO, ECO), a polyvulcanized rubber (T), a silicone rubber (Q), a fluororubber (FKM, FZ), and a urethane rubber (U), a polyurethane resin, a polyisocyanate resin, a polyisocyanurate resin, a phenol resin, and an epoxy resin. One of the resins may be used singly, or a plurality of the resins may be used in combination. Among these examples, a polyurethane resin or a polyvinyl alcohol resin is preferably used from the viewpoint of coatability. The binder resin may contain a curing agent component.

The binder resin has a weight-average molecular weight of 10000 or more, or 20000 or more, and 150000 or less, or 100000 or less. By the binder resin having a weight-average molecular weight of more than or equal to the above lower limit, hydrophobicity of resin is easily secured. By the binder resin having a weight-average molecular weight of less than or equal to the above upper limit, appropriate resin softness is easily secured and flex resistance and coatability are easily improved. The weight-average molecular weight can be calculated by a GPC method.

The binder resin may have a glass transition temperature of 55°C or higher, or 80°C or higher, and 110°C or lower, or 100°C or lower. By the binder resin having a glass transition temperature of higher than or equal to the above lower limit, crystallizability is increased and therefore hydrophobicity of resin is easily secured. By the binder resin having a glass transition temperature of lower than or equal to the above upper limit, coatability is easily improved. The glass transition temperature can be measured by thermal analysis using a differential scanning calorimeter.

The binder resin may have a viscosity at 20°C of 500 mPa•s or more, or 1000 mPa•s or more, and 10000 mPa•s or less, or 6000 mPa•s or less. The viscosity can be measured by a B-type rotational viscometer.

The content of the binder resin contained in the fire-extinguishing material composition may be 2 to 30 mass% or 4 to 15 mass% on the basis of the total amount of the fire-extinguishing material composition. When the content of the binder resin is less than or equal to the above upper limit, surface smoothness of a dried coating film is easily improved (cracking and generation of air bubbles in a coating film are easily suppressed). When the content of the binder resin is more than or equal to the above lower limit, coatability of the fire-extinguishing material composition to be applied in a roll to roll process is easily improved and adhesion to a base material and cutting processability of a coating film are easily improved.

(Liquid medium)

Examples of the liquid medium include an organic solvent. Examples of the organic solvent include a water-soluble solvent, and examples of the water-soluble solvent include: alcohols such as methanol, ethanol, isopropyl alcohol, and n-propyl alcohol; ketones such as acetone and methyl ethyl ketone; glycols such as ethylene glycol and diethylene

glycol; and glycol ethers such as N-methylpyrrolidone, tetrahydrofuran, and butyl cellosolve. From the viewpoint of use of the liquid medium together with the deliquescent salt, the liquid medium may be an alcohol solvent, and may specifically be a mixed solvent of ethanol and isopropyl alcohol.

The amount of the liquid medium may be adjusted as appropriate according to the method of using the fire-extinguishing material composition, and can be set to 40 to 95 mass% on the basis of the total amount of the fire-extinguishing material composition. The fire-extinguishing material composition containing the liquid medium can be called a fire-extinguishing material coating solution.

(Other components)

The fire-extinguishing material composition may have blended therein a component other than described above. Examples of the other component include a colorant, an antioxidant, a flame retardant, an inorganic filler, a fluidity imparting agent, a moisture-proofing agent, a dispersant, a UV absorber, and a catalyst. These other components can be selected as appropriate according to, for example, the type of the salt, the compound having an acid anhydride group, the binder resin, or the liquid medium. The content of the other component contained in the fire-extinguishing material composition is, for example, 10 mass% or less on the basis of the total amount of the fire-extinguishing material composition.

<Fire-extinguishing material according to first aspect>

A fire-extinguishing material according to the first aspect can be formed from the fire-extinguishing material composition according to the first aspect. An example of a method for forming (method for producing) the fire-extinguishing material is described below.

The fire-extinguishing material can be formed on an object by applying a fire-extinguishing material coating solution onto a surface to be treated of the object and drying the fire-extinguishing material coating solution. Examples of a material of the object include a metal, a resin, wood, ceramic, and glass, and the object may be non-porous or porous.

The application can be performed by a wet coating method. Examples of the wet coating method include a gravure coating method, a comma coating method, a spray coating method, a dip coating method, a curtain coating method, a spin coating method, a sponge roll method, a die coating method, and painting with brush.

The viscosity of the fire-extinguishing material coating solution is, for example, preferably set to 1 to 2000 mPa•s in a gravure coating method, preferably set to 500 to 100000 mPa•s in a comma coating method, and preferably set to 0.1 to 4000 mPa•s in a spray coating method. The amount of the liquid medium may be adjusted as appropriate so that the viscosity of the coating solution is in the desired range. The viscosity can be measured by a coaxial-cylinder rotational viscometer.

When the object is porous, the fire-extinguishing material coating solution can infiltrate the object. In that case, the fire-extinguishing material may be formed on an object by impregnating the object with the fire-extinguishing material coating solution and drying the fire-extinguishing material coating solution.

The fire-extinguishing material can also be obtained by molding the fire-extinguishing material composition. The shape of the fire-extinguishing material may be selected according to the use thereof, and the fire-extinguishing material may be a particulate fire-extinguishing material, a tabular fire-extinguishing material, a columnar fire-extinguishing material, or the like.

[Fire-extinguishing material composition according to second aspect]

<First embodiment>

A fire-extinguishing material composition according to the second aspect contains: a fire-extinguishing agent containing at least one salt of an organic salt or an inorganic salt; and a binder, wherein the binder has a weight reduction ratio up to a temperature of 400°C of 30% or more when heated from 30°C to 500°C at a temperature increase rate of 5°C/min in thermogravimetric measurement in an air atmosphere.

(Fire-extinguishing agent)

The fire-extinguishing agent contains at least one salt of an organic salt or an inorganic salt, and an oxidant. As the organic salt and the inorganic salt, the same organic salts and inorganic salts as used for the fire-extinguishing material composition according to the first aspect can be used.

Examples of the oxidant include potassium chlorate, sodium chlorate, strontium chlorate, ammonium chlorate, magnesium chlorate, potassium nitrate, sodium nitrate, strontium nitrate, ammonium perchlorate, potassium perchlorate,

basic copper nitrate, copper(I) oxide, copper(II) oxide, iron(II) oxide, iron(III) oxide, and molybdenum trioxide. Among these examples, potassium chlorate is preferably used.

The content of the fire-extinguishing agent contained in the fire-extinguishing material composition may be 70 to 97 mass% or 85 to 92 mass% on the basis of the total amount of the fire-extinguishing material composition. When the content of the fire-extinguishing agent is less than or equal to the above upper limit, the fire-extinguishing material composition easily suppresses deliquescence of a salt, and increases coatability, thus facilitating formation of a film. When the content of the fire-extinguishing agent is more than or equal to the above lower limit, the fire-extinguishing material composition easily exhibits a sufficient fire-extinguishing ability.

(Binder)

The binder is preferably one that easily reduces weight by heat. That is, the binder has a weight reduction rate up to a temperature of 400°C of 30% or more when heated from 30°C to 500°C at a temperature increase rate of 5°C/min in thermogravimetric measurement in an air atmosphere. The binder may have a weight reduction ratio of 32% or more. By the binder having a weight reduction rate within the above range, the fire-extinguishing material composition obtained has an excellent ability of extinguishing a fire that has started. When a plurality of binders are contained, the weight reduction ratio of the binder means the weight reduction ratio of the mixture of the binders. The upper limit of this value is, for example, 88%, and may be 46% or 32%.

In order to select a binder appropriate for the fire-extinguishing material composition, the following selecting method may be performed. That is, a method for selecting a binder includes: a step of heating a binder to be evaluated from 30°C to 500°C at a temperature increase rate of 5°C/min in thermogravimetric measurement in an air atmosphere, and measuring the weight reduction rate up to a temperature of 400°C of the binder; and a step of determining a binder having a weight reduction rate of 30% or more as capable of preparing a fire-extinguishing material composition that exerts good initial fire-extinguishing properties. The weight reduction rate used as a criterion may be 32% or more.

As a resin used as the binder, the same binder resins as described for the fire-extinguishing material composition according to the first aspect can be used.

The binder has a weight-average molecular weight of 5000 or more, or 20000 or more, and 150000 or less, or 100000 or less. By the binder having a weight-average molecular weight of more than or equal to the above lower limit, hydrophobicity of resin is easily secured. By the binder having a weight-average molecular weight of less than or equal to the above upper limit, appropriate resin softness is easily secured and flex resistance and coatability are easily improved. The weight-average molecular weight can be calculated by a GPC method.

The glass transition temperature of the binder is not particularly limited, and the binder may have a glass transition temperature of -40°C or higher, 55°C or higher, or 80°C or higher, and 110°C or lower, or 100°C or lower. By the binder having a glass transition temperature of higher than or equal to the above lower limit, crystallizability is increased and therefore hydrophobicity of resin is easily secured. By the binder having a glass transition temperature of lower than or equal to the above upper limit, coatability is easily improved. The glass transition temperature can be measured by thermal analysis using a differential scanning calorimeter.

The binder may have a viscosity at 20°C of 500 mPa•s or more, or 1000 mPa•s or more, and 10000 mPa•s or less, or 6000 mPa•s or less. The viscosity can be measured by a B-type rotational viscometer.

The content of the binder contained in the fire-extinguishing material composition may be 2 to 30 mass% or 4 to 15 mass% on the basis of the total amount of the fire-extinguishing material composition. When the content of the binder is less than or equal to the above upper limit, surface smoothness of a dried coating film is easily improved (cracking and generation of air bubbles in a coating film is easily suppressed). When the content of the binder is more than or equal to the above lower limit, coatability of the fire-extinguishing material composition to be applied in a roll to roll process is easily improved and adhesion to a base material and cutting processability of a coating film are easily improved.

(Liquid medium)

The fire-extinguishing material composition may further contain a liquid medium. As a solvent used as the liquid medium, the same liquid solvents as described for the fire-extinguishing material composition according to the first aspect can be used.

The amount of the liquid medium may be adjusted as appropriate according to the method of using the fire-extinguishing material composition, and can be set to 30 to 70 mass% on the basis of the total amount of the fire-extinguishing material composition. The fire-extinguishing material composition containing the liquid medium can be called a fire-extinguishing material coating solution.

(Other components)

The fire-extinguishing material composition may have mixed therein a component other than described above. Examples of the other component include a surfactant, a silane coupling agent, an anti-blocking agent, a colorant, an antioxidant, a flame retardant, an inorganic filler, a fluidity imparting agent, a moisture-proofing agent, a dispersant, a UV absorber, a softness imparting agent, and a catalyst. These other components can be selected as appropriate according to, for example, the type of the fire-extinguishing agent, the binder, or the liquid medium. The content of the other component contained in the fire-extinguishing material composition is, for example, 10 mass% or less on the basis of the total amount of the fire-extinguishing material composition.

[Method for producing fire-extinguishing material composition according to second aspect]

The fire-extinguishing material composition according to the second aspect can be produced by mixing: a fire-extinguishing agent containing at least one salt of an organic salt or an inorganic salt; a binder; and other components used as necessary. Any binder may be used as long as the binder is, in the method for selecting a binder described above, determined as capable of preparing a fire-extinguishing material composition that exerts good initial fire-extinguishing properties.

<Second embodiment>

A fire-extinguishing material composition according to a second embodiment of the second aspect contains: a fire-extinguishing agent containing at least one salt of an organic salt or an inorganic salt; a first binder; and a second binder, wherein the first binder has a weight reduction rate up to a temperature of 400°C of 50% or more when heated from 30°C to 500°C at a temperature increase rate of 5°C/min in thermogravimetric measurement in an air atmosphere, the second binder has a weight reduction rate up to a temperature of 400°C of 15% or less when heated from 30°C to 500°C at a temperature increase rate of 5°C/min in thermogravimetric measurement in an air atmosphere, and with the mass of the first binder taken as 100 parts, the mass of the second binder is 250 parts or less.

As the fire-extinguishing agent and the first binder in the second embodiment of the second aspect, the same fire-extinguishing agents and the binders as described in the first embodiment can be used.

The second binder is used in combination with the first binder that easily reduces weight by heat, and may therefore be one that is less likely to reduce weight by heat. That is, in the thermogravimetric measurement performed under the conditions described above, the second binder may have a weight reduction rate of 15% or less as described above, or 13% or less or 12% or less. The lower-limit value of this value is, for example, 0%, and may be 3% or 7%.

The content of the second binder contained in the fire-extinguishing material composition is 250 parts or less as described above, and may be 200 parts or less, 150 parts or less, or 100 parts or less, with the mass of the first binder taken as 100 parts. When the content of the second binder is within the above range, the fire-extinguishing material composition obtained can obtain desired physical properties according to the type of the second binder while keeping a practically sufficient ability of extinguishing a fire that has started. The lower-limit value of this value is, for example, 10 parts, and may be 50 parts.

As the first binder used in combination with the second binder, one that further easily reduces weight by heat may be used. That is, in the thermogravimetric measurement performed under the conditions described above, the first binder preferably has a weight reduction rate of 50% or more, and may have a weight reduction rate of 52% or more, 54% or more, or 60% or more.

As the second binder, for example, a compound having an acid anhydride group can be used. By containing the compound having an acid anhydride group, the fire-extinguishing material composition enables a molded article to stably maintain the properties thereof over a long period. This reason is not clear, but it is presumed that the acid anhydride group can react with water and therefore traps water having entered, and thereby prevents deliquescence of a salt contained in a molded article. It is also presumed that the compound having an acid anhydride group modifies the surface of a salt and thus improves hydrophobicity, and thereby suppresses the contact of the salt with water.

The compound having an acid anhydride group is not particularly limited as long as the compound has, in a molecule thereof, one or more acid anhydride groups formed by dehydration and condensation of two molecules of oxoacids. Examples of the oxoacids that form an acid anhydride group include a carboxylic acid, sulfuric acid, nitric acid, and phosphoric acid. Among these examples, the oxoacids that form an acid anhydride group are preferably carboxylic acids. Examples of a compound having a carboxylic anhydride group include simple carboxylic anhydrides such as phthalic anhydride, succinic anhydride, and maleic anhydride, and copolymers containing, as a monomer, a carboxylic anhydride, such as maleic anhydride, having an unsaturated bond. The compound having an acid anhydride group may be used as the first binder.

The compound having an acid anhydride group may further have an alkoxysilyl group in a molecule of the

compound. When the compound contained in the fire-extinguishing material composition and having an acid anhydride group further has an alkoxysilyl group in a molecule of the compound, the fire-extinguishing material composition enables a molded article to more stably maintain the properties thereof over a long period. This reason for this is not clear, but it is presumed that an alkoxysilane is hydrolyzed and then undergoes a self-reaction to form a siloxane, thereby improving water resistance and the density of film and thus suppressing the contact between a deliquescent salt and water. As the compound having, in a molecule thereof, an acid anhydride group and an alkoxysilyl group, for example, a silane coupling agent may be used. The silane coupling agent used as the compound having an acid anhydride group may have a similar function to the binder resin in the fire-extinguishing material composition.

As the second binder, for example, a thermoplastic resin and a thermosetting resin can be used. From the viewpoint of facilitating formation of a coating film and stabilizing the properties of a film formed, a surfactant, a silane coupling agent, an anti-blocking agent, an antioxidant, a flame retardant, a fluidity imparting agent, a moisture-proofing agent, a dispersant, a UV absorber, a softness imparting agent, or the like may also be used. By using, as the second binder, a different resin for each case as appropriate or resins in combination, it is possible to impart to the fire-extinguishing material composition desired physical properties such as improvement of adhesion to a base material, improvement of processability, reduction of tackiness, and improvement of coatability in a roll to roll process. In particular, the second binder is preferably a compound having an acid anhydride group, particularly preferably a silane coupling agent having a carboxylic anhydride group and an alkoxysilyl group.

The fire-extinguishing material composition according to the second embodiment of the second aspect may further contain the same liquid medium or other component as the fire-extinguishing material composition according to the first embodiment. The amount of the liquid medium may be adjusted as appropriate according to the method of using the fire-extinguishing material composition, and can be set to 30 to 70 mass% on the basis of the total amount of the fire-extinguishing material composition. The content of the other component contained in the fire-extinguishing material composition is, for example, 10 mass% or less on the basis of the total amount of the fire-extinguishing material composition.

<Fire-extinguishing material according to second aspect>

A fire-extinguishing material according to the second aspect can be formed from the fire-extinguishing material composition according to the second aspect. Fig. 1 is a cross-sectional view schematically illustrating one embodiment of the fire-extinguishing material. A fire-extinguishing material 1 includes a base material 2, and a fire-extinguishing material layer 3 provided on one surface of the base material 2. The fire-extinguishing material 1 can be produced through a step of applying a fire-extinguishing material coating solution onto one surface of a base material 2, and a step of forming a fire-extinguishing material layer 3 by drying a layer formed by the application. A material of the base material 2 is, for example, a metal, a resin, wood, ceramic, or glass, and may be non-porous or porous.

The application can be performed by a wet coating method. Examples of the wet coating method include a gravure coating method, a comma coating method, a spray coating method, a dip coating method, a curtain coating method, a spin coating method, a sponge roll method, a die coating method, and painting with brush.

The viscosity of the fire-extinguishing material coating solution is, for example, preferably set to 1 to 2000 mPa•s in a gravure coating method, preferably set to 500 to 100000 mPa•s in a comma coating method, and preferably set to 0.1 to 4000 mPa•s in a spray coating method. The amount of the liquid medium may be adjusted as appropriate so that the viscosity of the coating solution is in the desired range. The viscosity can be measured by a coaxial-cylinder rotational viscometer.

When the base material 2 is porous, the fire-extinguishing material coating solution can infiltrate the base material 2. In that case, a part of the fire-extinguishing material layer 3 may permeate the base material 2 and the remaining part of the fire-extinguishing material layer 3 may be laminated on the surface of the base material 2.

The fire-extinguishing material can also be obtained by molding the fire-extinguishing material composition into a prescribed shape. The shape of the fire-extinguishing material may be selected according to the use thereof, and the fire-extinguishing material may be a particulate fire-extinguishing material, a tabular fire-extinguishing material, a columnar fire-extinguishing material, or the like.

[Device having auto fire-extinguishing function]

A device having an auto fire-extinguishing function includes a fire-extinguishing material. Examples of the device having an auto fire-extinguishing function include electric system equipment having mounted thereon electric wiring and cables, an electric transformer, an electric circuit, and the like. Specific examples of the device include a switchboard, a distribution board, a rechargeable battery (a lithium-ion battery and the like), a battery (a mobile battery, a battery for tools, an EV battery for vehicles, and the like), and an electricity storage system having those components mounted thereon. Examples of the device further include a location having an unintended ignition risk, such as a rechargeable battery

recycling box, a trash box, and a plug cover.

<Fire-extinguishing material sheet according to third aspect>

A fire-extinguishing material sheet according to the third aspect is obtained by forming a fire-extinguishing agent composition into a sheet. This fire-extinguishing material sheet is used by attaching it to an object that can be ignited. When the object is ignited, a chemical species having a fire-extinguishing function is discharged from the fire-extinguishing agent composition in response to thermal energy of the fire and thereby extinguishes the flame. Such a fire-extinguishing material sheet does not require the use of a fire extinguisher, a fire-extinguishing device, or the like for fire extinguishing, and is therefore expressed as having "self-extinguishing properties".

The object on which fire extinguishing is to be performed is not particularly limited as long as the object may possibly be ignited. Examples of the object that may possibly be ignited include an electric wire, a switch board, a distribution board, a control board, a rechargeable battery (a lithium-ion battery and the like), building materials such as building wall paper and a ceiling material, a lithium-ion battery recycling box (a recycling box), a trash box, a vehicle-related member, and various members such as a plug and a plug cover. Particularly, the fire-extinguishing material sheet according to the present embodiment has high curve-following performance, and is therefore appropriate for application to a curve.

As illustrated in Fig. 2, a fire-extinguishing material sheet 11 according to the third aspect includes a resin film 12 and a fire-extinguishing agent layer 13 laminated on the resin film 12. The fire-extinguishing agent layer 13 is obtained by forming a fire-extinguishing agent composition into a sheet. The fire-extinguishing agent layer 13 may have a thickness of 70 μm to 500 μm, 90 to 300 μm, or 110 μm to 200 μm.

A mandrel diameter of the fire-extinguishing agent layer 13 may be 18 mm or less, 12 mm or less, 6 mm or less, or 3 mm or less. Here, the "mandrel diameter" refers to the minimum diameter of a mandrel with which no cracking (breakage) is observed in the fire-extinguishing agent layer 13 singly subjected to a mandrel test with type 1, in accordance with JIS K 5600-5-1. The minimum possible diameter in the test is 2 mm.

The resin film 12 is a film to be a support when the fire-extinguishing agent layer 13 is formed in the shape of a sheet. The material of the resin film 12 is not particularly limited and, for example, a polyethylene terephthalate film is preferred. In consideration of single use of the fire-extinguishing agent layer 13, the surface, in contact with the fire-extinguishing agent layer 13, of the resin film 12 preferably has a release treatment performed thereon.

[Fire-extinguishing agent composition according to third aspect]

A fire-extinguishing agent composition according to the third aspect contains at least a fire-extinguishing agent, a binder resin, and an additive. The fire-extinguishing agent composition is a composition obtained by uniformly mixing these components.

(Fire-extinguishing agent)

As the fire-extinguishing agent, various organic salts and inorganic salts can be used singly or in mixture. As an organic salt and an inorganic salt, the same organic salts and inorganic salts as described for the fire-extinguishing material composition according to the first aspect can be used.

The fire-extinguishing agent may contain a compound having an oxidizing action. Examples of the compound having an oxidizing action include chlorates such as potassium chlorate, sodium chlorate, strontium chlorate, ammonium chlorate, and magnesium chlorate. These potassium salts can generate an aerosol therefrom in response to thermal energy of a fire.

The amount of the fire-extinguishing agent can be selected as appropriate according to the form of an object, the strength of a fire at the time of ignition, the fire-extinguishing time, the available space, or the like. The fire-extinguishing ability is improved and the fire-extinguishing time is shortened along with the increase of the amount of the fire-extinguishing agent. However, the increase of the amount of the fire-extinguishing agent sometimes also increases the volume thereof and therefore limits the place where a fire-extinguishing body can be disposed. The amount of the fire-extinguishing agent can be set to, for example, 0.01 to 1.0 g/$cm^2$, and may be 0.02 to 0.2 g/$cm^2$.

Regarding the content of the fire-extinguishing agent in the fire-extinguishing agent composition, the proportion by weight of solid content of the fire-extinguishing agent (hereinafter called "proportion of solid content of the fire-extinguishing agent) to the total of the fire-extinguishing agent, the binder resin, and the additive is 60 wt% to 98 wt%. When this proportion is 60 wt% or more, the fire-extinguishing agent composition can have a sufficient fire-extinguishing function. When this proportion is 98 wt% or less, a sheet into which the fire-extinguishing agent composition is formed can sufficiently exhibit curvature follow-up performance. The proportion of solid content of the fire-extinguishing agent may be 70 wt% to 97 wt%, 75 wt% to 96 wt%, 80 wt% to 95 wt%, or 85 wt% to 94 wt%.

(Binder resin)

The binder resin (hereinafter, also simply called a "binder") uniformly disperses the fire-extinguishing agent, and also bonds particles of the fire-extinguishing agent. In addition, the binder resin also works as a fuel for discharging from the fire-extinguishing agent composition a chemical species having a fire-extinguishing function, and further increases coatability of the fire-extinguishing agent composition when a fire-extinguishing agent layer is formed. Further, the binder resin can suppress deliquescence of a deliquescent salt contained as a fire-extinguishing agent component.

As the binder resin, a thermoplastic resin and a thermosetting resin can be used. Examples of the thermoplastic resin include polyolefin resins such as a polypropylene resin, a polyethylene resin, a poly(1-)butene resin, and a polypentene resin, a polystyrene resin, an acrylonitrile-butadiene-styrene resin, a methyl methacrylate-butadiene-styrene resin, an ethylene-vinyl acetate resin, an ethylene-propylene resin, a polycarbonate resin, a polyphenylene ether resin, an acrylic resin, a polyamide resin, and a polyvinyl chloride resin. As the thermosetting resin, the same thermosetting resins as described for the fire-extinguishing material composition according to the first aspect can be used.

As the binder resin, at least one resin of a polyvinyl acetal resin or a polyvinyl alcohol resin is preferably contained. Both the polyvinyl acetal resin and the polyvinyl alcohol resin are a hydroxyl group-containing resin. The polyvinyl acetal resin improves hydrophobicity of resin along with the increase in the degree of acetalization, and therefore easily suppresses moisture absorption of a salt (a salt used as the fire-extinguishing agent). The polyvinyl alcohol resin is not acetalized and therefore has more hydroxyl groups than the polyvinyl acetal resin, but is considered to have many reactive sites with resin components other than the resins described above. Therefore, from the viewpoint of designing the binder, the polyvinyl alcohol resin is higher in freedom of designing and more easily handled.

The polyvinyl alcohol resin can be obtained by saponification of a polyvinyl acetate resin. Examples of the polyvinyl acetate resin include polyvinyl acetate which is a homopolymer of vinyl acetate, and a copolymer of vinyl acetate and another monomer. Examples of the other monomer include unsaturated carboxylic acids, unsaturated sulfonic acids, olefins, vinyl ethers, and acrylamides having an ammonium group.

The degree of saponification of the polyvinyl alcohol resin is not particularly limited, and the polyvinyl alcohol resin may have a degree of saponification of 80 mol% or more or 95 mol% or more By the polyvinyl alcohol resin having an appropriate degree of saponification, the polyvinyl alcohol resin easily improves adhesion to a salt and thus easily suppresses moisture absorption of the salt.

The polyvinyl alcohol resin may have been modified. Examples of a modification form include acetoacetyl group modification, carboxylic acid modification, carbonyl group modification, sulfonic acid modification, hydrazide group modification, thiol group modification, alkyl group modification, silyl group modification, polyethylene glycol group modification, ethylene oxide group modification, modification by a group having a urethane bond, and phosphoric acid ester group modification. By modifying the polyvinyl alcohol resin, the polyvinyl alcohol resin easily improves adhesion to a salt and thus easily suppresses moisture absorption of the salt.

The polyvinyl acetal resin can be obtained by acetalization of a polyvinyl alcohol resin.

The degree of saponification of the polyvinyl alcohol resin used to obtain the polyvinyl acetal resin is not particularly limited, and the polyvinyl alcohol resin may have a degree of saponification of 80 mol% or more, or 95 mol% or more

The aldehyde used for acetalization is not particularly limited, and examples of the aldehyde include an aldehyde containing an aliphatic group or aromatic group having 1 to 10 carbon atoms. Examples of the aldehyde include: aliphatic aldehydes such as formaldehyde, acetaldehyde, propionaldehyde, n-butyraldehyde, isobutyraldehyde, n-valeraldehyde, n-hexylaldehyde, 2-ethylbutyraldehyde, 2-ethylhexylaldehyde, n-hepthylaldehyde, n-octeraldehyde, n-nonylaldehyde, n-decylaldehyde, and amylaldehyde; and aromatic aldehydes such as benzaldehyde, cinnamaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde. These aldehydes may be used singly or in combination of two or more thereof. Among these examples, the aldehyde may be butyraldehyde, 2-ethylhexylaldehyde, or n-nonylaldehyde, or may be butyraldehyde from the viewpoint of excellent acetalization reactivity.

The ketone used for acetalization is not particularly limited, and examples of the ketone include acetone, ethyl methyl ketone, diethyl ketone, t-butyl ketone, dipropyl ketone, allyl ethyl ketone, acetophenone, p-methylacetophenone, 4'-aminoacetophenone, p-chloroacetophenone, 4'-methoxyacetophenone, 2'-hydroxyacetophenone, 3'-nitroacetophenone, P-(1-piperidino)acetophenone, benzalacetophenone, propiophenone, benzophenone, 4-nitrobenzophenone, 2-methylbenzophenone, p-bromobenzophenone, cyclohexyl(phenyl)methanone, 2-butyronaphthone, 1-acetonaphthone, 2-hydroxy-1-acetonaphthone, and 8'-hydroxy-1'-benzonaphthone.

The usage of the aldehyde and the ketone can be set as appropriate according to the degree of acetalization. For example, the total amount of the aldehyde and the ketone can be set to a hydroxyl group equivalent of 0.30 to 0.45 relative to the hydroxyl groups of the polyvinyl alcohol resin that has not been reacted.

The amount of hydroxyl groups (residual hydroxyl group number) of the polyvinyl acetal resin may be 10 to 40 mol% or 15 to 25 mol%. The polyvinyl acetal resin having an amount of hydroxyl groups within the above range can obtain

hydrophobicity due to the aliphatic group or aromatic group of the aldehyde and the ketone, and tends to decelerate the speed of moisture absorption. The amount of hydroxyl groups is proportion (mol%) of the amount of ethylene groups having a hydroxyl group bonded thereto, to the total amount of ethylene groups in the main chain. The amount of ethylene groups having a hydroxyl group bonded thereto can be calculated by, for example, a method in accordance with "Testing Methods for Polyvinyl Butyral" in JIS K 6728.

The polyvinyl acetal resins and the polyvinyl alcohol resins may be used singly or in combination of two or more thereof.

The polyvinyl acetal resin and the polyvinyl alcohol resin may have a weight-average molecular weight Mw of 10000 or more, or 20000 or more, and 150000 or less, or 100000 or less. By the polyvinyl acetal resin and the polyvinyl alcohol resin having a weight-average molecular weight Mw of more than or equal to the above lower limit, hydrophobicity of resin is easily secured. By the polyvinyl acetal resin and the polyvinyl alcohol resin having a weight-average molecular weight Mw of less than or equal to the above upper limit, appropriate resin softness is easily secured and flex resistance and coatability are easily improved. The weight-average molecular weight Mw can be calculated by a GPC method.

The polyvinyl acetal resin and the polyvinyl alcohol resin may have a glass transition temperature Tg of 55°C or higher, or 80°C or higher, and 110°C or lower, or 100°C or lower. By the polyvinyl acetal resin and the polyvinyl alcohol resin having a glass transition temperature Tg of higher than or equal to the above lower limit, crystallizability is increased and therefore hydrophobicity of resin is easily secured. By the polyvinyl acetal resin and the polyvinyl alcohol resin having a glass transition temperature Tg of lower than or equal to the above upper limit, coatability is easily improved. The glass transition temperature Tg can be measured by thermal analysis using a differential scanning calorimeter.

From the viewpoint of allowing the polyvinyl acetal resin and the polyvinyl alcohol resin contained in the binder to sufficiently exert the characteristics thereof, the content of the resins can be set to 40 wt% or more on the basis of the total amount of the binder, and may be set to 70 wt% or more, 80 wt% or more, 85 wt% or more, 90 wt% or more, 95 wt% or more, 98 wt% or more, or 100 wt%.

From the viewpoint of suppressing moisture absorption of a salt, accompanying improvement of hydrophobicity, the binder may contain a component other than the resins described above. Examples of the other component include a silane coupling agent. The content of the other component contained in the binder is, for example, 60 wt% or less.

(Additive)

The additive in the present embodiment is used to make the fire-extinguishing agent composition have softness and thus increase moldability thereof, and to increase curve follow-up performance of a sheet molded product. Specifically, this additive is preferably an epoxy compound. Among epoxy compounds, a bi- or more-functional epoxy compound is preferred, and a compound represented by a following chemical formula (1) is particularly preferred.

[Chemical Formula 1]

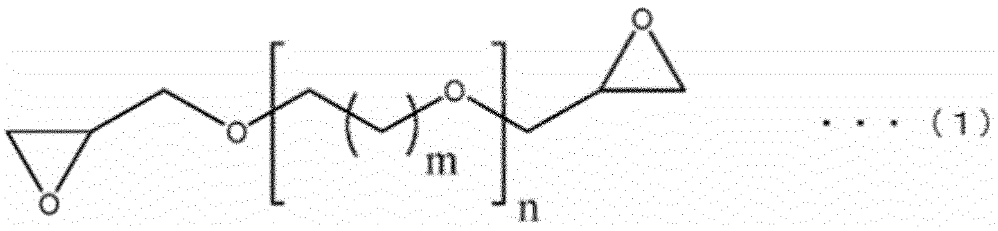

In the chemical formula (1), m is an integer 1 to 6, and n is an integer 1 to 30. m may be an integer 1 to 4, or an integer 1 to 3. n may be an integer 1 to 20, or an integer 1 to 15. Particularly when m is 1, n may be an integer 1 to 25. Particularly when m is 2 or 3, n may be an integer 5 to 15, or an integer 8 to 12. Due to the variability of the length of a chain generated in the synthesis of the compound, n expresses the average of the length, and is not necessarily an integer. For example, the phrase "n is an integer 5 to 15" may be understood to be "n is any number in the range of 5 to 15".

Regarding the content of the additive in the fire-extinguishing agent composition, the proportion by weight of solid content of the additive to the total of the fire-extinguishing agent, the binder resin, and the additive may be 0.2 wt% to 12.0 wt%, 0.4 wt% to 8.0 wt%, or 1.0 wt% to 4.0 wt% from the viewpoint of the additive serving as a softness imparting agent for the fire-extinguishing agent composition.

When the compound added as the additive is a resin, the resin is regarded not as the binder resin but as the additive. The resin used as the additive is a resin with which a film is not formed when the resin is singly used as the binder resin. That is, the fire-extinguishing agent composition which contains, as the binder resin, singly a resin to be used as the additive can be applied to a base material to form a film, but the film is collapsed and peeled from the base material after

dried.

[Method for producing fire-extinguishing material sheet according to third aspect]

A fire-extinguishing material sheet 11 can be produced by preparing an application solution (fire-extinguishing agent layer-forming composition solution) containing a fire-extinguishing agent, a binder resin, and an additive, applying the application solution onto a resin film, and drying the application solution. Here, as a method for preparing the application solution, the application solution may be prepared by separately adjusting a fire-extinguishing agent solution containing a fire-extinguishing agent, and a binder resin solution containing a binder resin, and mixing these solutions with an additive.

A solvent used in the preparation of the fire-extinguishing agent solution and the binder resin solution is preferably an organic solvent. Examples of the organic solvent include a water-soluble solvent, and examples of the water-soluble solvent include: alcohols such as methanol, ethanol, isopropyl alcohol, and n-propyl alcohol; ketones such as acetone and methyl ethyl ketone; glycols such as ethylene glycol and diethylene glycol; and glycol ethers such as N-methylpyrrolidone (NMP), tetrahydrofuran, and butyl cellosolve. When a fire-extinguishing agent having moisture absorbency is used, the organic solvent may be an alcohol solvent, and may specifically be a mixed solvent of ethanol and isopropyl alcohol.

When the fire-extinguishing agent solution is prepared, the weight ratio between the fire-extinguishing agent and the solvent may be 30 : 70 to 70 : 30, 40 : 60 to 60 : 40, or 45 : 55 to 55 : 45. When the binder resin solution is prepared, the weight ratio between the binder resin and the solvent may be 2 : 98 to 30 : 70, 5 : 95 to 25 : 75, or 10 : 90 to 20 : 80. The amount of the solvent is preferably within the range of these lower-limit values to keep coatability of the application solution. The amount of the solvent is preferably within the range of these upper-limit values to secure thickness necessary for one coating process. From the viewpoint of enabling sufficient drying with less residual solvent after drying and of not undergoing cracking of the film nor air bubbles after drying, the amount of the solvent is preferably within the range of these upper limits.

Examples of a method for applying the application solution onto a resin film include a wet coating method. Examples of the wet coating method include a gravure coating method, a comma coating method, a spray coating method, a dip coating method, a curtain coating method, a spin coating method, a sponge roll method, a die coating method, and painting with brush. Drying after the application can be performed using an oven.

<Advantageous effects>

The fire-extinguishing material sheet 11 formed as described above can be used by attaching to an object that can be ignited. The fire-extinguishing material sheet 11 is not only applicable for attachment to a compact and narrow place, but can also be bent or wound without occurrence of cracking and peeling of the fire-extinguishing agent layer 13 even when attached to a curved place (for example, the interior of a battery case, and winding around a battery itself) and a place with irregularities (for examples, a corner of a case) that have an ignition risk. In addition, the fire-extinguishing material sheet 11 is suitable for roll to roll processing because of the advantageous characteristics thereof. When an object having the fire-extinguishing material sheet 11 attached thereto is ignited, a chemical species having a fire-extinguishing function is discharged (discharged, for example, as an aerosol) from the fire-extinguishing agent layer 13 in response to thermal energy of the fire and thereby can extinguish the flame.

<Fire-extinguishing material laminate>

As another embodiment of the present disclosure, an aspect is also applicable in which a resin layer and a water vapor barrier layer are laminated on a sheet into which the fire-extinguishing agent composition is formed. Here, this aspect is called a "fire-extinguishing material laminate" as one type of fire-extinguishing material sheet. As illustrated in Fig. 3, a fire-extinguishing material laminate 100 includes resin layers 14, 14 covering a fire-extinguishing agent layer 13 from both surfaces thereof, and further includes water vapor barrier layers 16, 16, with adhesive layers 15, 15 interposed between both surfaces of the resin layers 14, 14 and the water vapor barrier layers 16, 16. Further, an adhesive layer 17 is provided on one water vapor barrier layer 16 of the water vapor barrier layers, and a release film 18 is laminated on the adhesive layer 17. The release film 18 is peeled when the fire-extinguishing material laminate 100 is attached to a desired location. The release film 18 may be made from a resin or paper.

Here, examples of a material of the resin layers 14, 14 include a polyolefin (such as PE, PP, and COP), polyester (such as PET), a fluororesin (such as PTFE, ETFE, EFEP, PFA, FEP, and PCTFE), a vinyl resin (such as PVC and PVA), an acrylic resin, an epoxy resin, a polyamide, and a polyimide.

The resin layers 14, 14 may have heat-melting properties (thermal fusion properties). Examples of a resin having heat-melting properties include a polyolefin resin. That is, the resin layers 14, 14 may contain a polyolefin resin. Examples of the polyolefin resin include polyolefin resins such as a low-density polyethylene resin (LDPE), a linear low-density

polyethylene resin (LLDPE), a medium-density polyethylene resin (MDPE), and a cast polypropylene resin (CPP), polyethylene resins such as an ethylene-vinyl acetate copolymer and an ethylene-α-olefin copolymer, and polypropylene resins such as a propylene-ethylene random copolymer, a propylene-ethylene block copolymer, and a propylene-α-olefin copolymer. Among these examples, the polyolefin resin may contain a low-density polyethylene resin (LDPE), a linear low-density polyethylene resin (LLDPE), or a cast polypropylene resin (CPP) from the viewpoint of having excellent heat-sealing properties, and having a low degree of water vapor transmission and easily suppressing degradation of the fire-extinguishing agent. These resins have transparency and thus facilitate appearance inspection of the fire-extinguishing agent. Therefore, for example, the replacement time of the fire-extinguishing material laminate is easily confirmed.

The resin layers 14, 14 have a larger area than the fire-extinguishing agent layer 13, and by bonding parts of the resin layers 14, 14 in contact with each other through thermal fusion (heat sealing), the fire-extinguishing agent layer 13 can be sealed in the resin layers 14, 14. In Fig. 3, the fire-extinguishing agent layer 13 obtained by peeling the resin film 12 from the fire-extinguishing material sheet 10 is used, but the fire-extinguishing material sheet 10 itself without peeling the resin film 12 therefrom may be sealed in the resin layers 14, 14. The resin layers 14, 14 can singly have a thickness of 25 μm to 150 μm, and may have a thickness of 30 μm to 100 μm.

Examples of an adhesive forming the adhesive layers 15, 15 include an acrylic adhesive, an epoxy adhesive, a silicone adhesive, a polyolefin adhesive, a urethane adhesive, a polyvinyl ether adhesive, and a synthetic adhesive thereof. Among these examples, an epoxy-urethane synthetic adhesive can suitably be used as the adhesive from the viewpoint of achieving both adhesion to the resin layers 14, 14 in 85°C/85%RH high temperature and high humidity and low costs.

The water vapor barrier layers 16, 16 make the fire-extinguishing material laminate 100 easily maintain water vapor barrier performance so as not to greatly change the properties of the fire-extinguishing agent not depending on the disposition place or use environment of the fire-extinguishing material laminate 100. The degree of water vapor transmission (in accordance with JIS K 7129, under the conditions of 40°C/90%RH) of the water vapor barrier layers 16, 16 can be designed according to the type of the fire-extinguishing agent, and therefore is not particularly limited, and can be set to 10 g/m$^2$/day or less, and may be 1 g/m$^2$/day or less. From the viewpoint of adjusting the degree of water vapor transmission, examples of the water vapor barrier layers 16, 16 include: a polyester resin layer (for example, a PET layer) including a metal oxide vapor deposition layer such as an alumina vapor deposition layer and a silica vapor deposition layer; and a metal foil such as an aluminum foil. When the water vapor barrier layers include a metal oxide vapor deposition layer, the metal oxide vapor deposition layer may be directed to the side of the fire-extinguishing agent. The water vapor barrier layers 16, 16 can singly have a thickness of 4.5 μm to 25 μm, and may have a thickness of 7 μm to 12 μm.

As the adhesive layer 17, a publicly known material can be used as appropriate. When the resin film 12 is sealed together with the fire-extinguishing agent layer 13, the adhesive layer 17 is provided on the side where the resin film 12 is present. The adhesive layer 17 enables attachment of the fire-extinguishing material laminate to an object.

When an object having the fire-extinguishing material laminate attached thereto is ignited, thermal energy of the fire melts the water vapor barrier layer 16, the adhesive layer 15, and the resin layer 14, and a chemical species having a fire-extinguishing function is discharged from the fire-extinguishing agent composition and thereby can extinguish the flame.

Heretofore, suitable embodiments of the third aspect have been described, but any embodiments of the third aspect are not limited by the embodiments described above. For example, in the embodiments described above, an aspect has been illustrated in which an application solution containing a fire-extinguishing agent, a binder resin, and an additive is prepared, and this application solution is applied onto a resin film to form a fire-extinguishing agent layer, but the resin film is not essential. An aspect may also be applied in which, in place of applying an application solution onto a resin film, an application solution is applied onto a surface to be treated of an object and dried to form a fire-extinguishing agent layer directly on the object. Examples of a material of the object include a metal, a resin, wood, ceramic, and glass, and the object may be non-porous or porous.

## Examples

In the following, the present disclosure will further specifically be described by way of examples. However, the present disclosure should not be limited to the following examples.

[Examples 1-1 to 1-5 and Comparative Examples 1-1 to 1-3]

<Formation of fire-extinguishing material>

(Example 1-1)

The following components were mixed to prepare a fire-extinguishing material composition.

Fire-extinguishing agent: mixture (87 parts by mass) of potassium citrate and potassium chlorate

Binder resin: ether urethane resin (6 parts by mass)

Compound having acid anhydride group: silane coupling agent (3 parts by mass)

Liquid medium: ethanol (87 parts by mass)

Liquid medium: isopropyl alcohol (14 parts by mass)

The mixture of potassium citrate and potassium chlorate was crushed in an agate mortar and then filtered with a No. 800-count mesh to adjust the particle size D50 to 8 to 12 μm. As the silane coupling agent, X-12-1287A (trade name, manufactured by Shin-Etsu Chemical Co., Ltd.) was used. This silane coupling agent has an acid anhydride group and an alkoxysilyl group.

The fire-extinguishing material composition obtained was, using an applicator (gap: 450 μm), applied onto a polyethylene terephthalate (PET) film (trade name: E7002, manufactured by TOYOBO Co., Ltd., thickness: 50 μm) and dried in an oven set to 75°C for 7 minutes. Thereby, a laminate including a 200-μm-thick fire-extinguishing material formed on the PET film was obtained.

(Example 1-2)

A fire-extinguishing material composition was prepared in the same manner as in Example 1-1 except that the amount of the silane coupling agent was set to 6 parts by mass, and a laminate was obtained.

(Example 1-3)

A fire-extinguishing material composition was prepared in the same manner as in Example 1-1 except that the amount of the silane coupling agent was set to 12 parts by mass, and a laminate was obtained.

(Example 1-4)

The following components were mixed to prepare a fire-extinguishing material composition.

Fire-extinguishing agent: mixture (87 parts by mass) of potassium citrate and potassium chlorate

Binder resin: polyvinyl butyral resin (6 parts by mass)

Compound having acid anhydride group: silane coupling agent (6 parts by mass)

Liquid medium: ethanol (130 parts by mass)

Liquid medium: isopropyl alcohol (5 parts by mass)

The mixture of potassium citrate and potassium chlorate was crushed in an agate mortar and then filtered with a No. 800-count mesh to adjust the particle size D50 to 8 to 12 μm. As the silane coupling agent, X-12-1287A (trade name, manufactured by Shin-Etsu Chemical Co., Ltd.) was used. This silane coupling agent has an acid anhydride group and an alkoxysilyl group.

The fire-extinguishing material composition obtained was, using an applicator (gap: 750 μm), applied onto a PET film and dried in an oven set to 75°C for 7 minutes. Thereby, a laminate including a 200-μm-thick fire-extinguishing material formed on the PET film was obtained.

(Example 1-5)

The following components were mixed to prepare a fire-extinguishing material composition.

Fire-extinguishing agent: mixture (87 parts by mass) of potassium citrate and potassium chlorate

Binder resin: ether urethane resin (5 parts by mass)

Compound having acid anhydride group: polymethyl vinyl ether/maleic anhydride copolymer (8 parts by mass)

Liquid medium: ethanol (87 parts by mass)

Liquid medium: isopropyl alcohol (14 parts by mass)

The mixture of potassium citrate and potassium chlorate was crushed in an agate mortar and then filtered with a No. 800-count mesh to adjust the particle size D50 to 8 to 12 μm. As the compound having an acid anhydride group, Gantrez AN-119 (manufactured by Ashland Japan Ltd.) was used. This compound is a polymethyl vinyl ether/maleic anhydride copolymer, and has, in a polymer skeleton thereof, an acid anhydride group but no alkoxysilyl group.

The fire-extinguishing material composition obtained was, using an applicator (gap: 450 μm), applied onto a polyethylene terephthalate (PET) film and dried in an oven set to 75°C for 7 minutes. Thereby, a laminate including a 200-μm-thick fire-extinguishing material formed on the PET film was obtained.

(Comparative Example 1-1)

The following components were mixed to prepare a fire-extinguishing material composition.

Fire-extinguishing agent: mixture (87 parts by mass) of potassium citrate and potassium chlorate

Binder resin: ether urethane resin (5 parts by mass)

Compound having acid anhydride group: none

Liquid medium: ethanol (87 parts by mass)

Liquid medium: isopropyl alcohol (14 parts by mass)

Other component: silane coupling agent (8 parts by mass)

The mixture of potassium citrate and potassium chlorate was crushed in an agate mortar and then filtered with a No. 800-count mesh to adjust the particle size D50 to 8 to 12 μm. As the silane coupling agent, X-12-1281A (trade name, manufactured by Shin-Etsu Chemical Co., Ltd.) was used. This silane coupling agent has an alkoxysilyl group but no acid anhydride group.

The fire-extinguishing material composition obtained was, using an applicator (gap: 450 μm), applied onto a polyethylene terephthalate (PET) film and dried in an oven set to 75°C for 7 minutes. Thereby, a laminate including a 200-μm-thick fire-extinguishing material formed on the PET film was obtained.

(Comparative Example 1-2)

The following components were mixed to prepare a fire-extinguishing material composition.

Fire-extinguishing agent: mixture (87 parts by mass) of potassium citrate and potassium chlorate

Binder resin: ether urethane resin (13 parts by mass)

Compound having acid anhydride group: none

Liquid medium: ethanol (87 parts by mass)

Liquid medium: isopropyl alcohol (14 parts by mass)

The mixture of potassium citrate and potassium chlorate was crushed in an agate mortar and then filtered with a No. 800-count mesh to adjust the particle size D50 to 8 to 12 μm.

The fire-extinguishing material composition obtained was, using an applicator (gap: 500 μm), applied onto a polyethylene terephthalate (PET) film and dried in an oven set to 75°C for 7 minutes. Thereby, a laminate including a 200-μm-thick fire-extinguishing material formed on the PET film was obtained.

<Sealing of laminate>

A barrier film including a sealant layer (a L-LDPE (linear low-density polyethylene) resin, thickness: 30 μm) and a base material layer (a PET resin including a silica vapor deposition film, thickness: 12 μm) was prepared. The barrier film had a water vapor transmission rate of 0.2 to 0.6 g/m$^2$/day (under the conditions of 40°C/90%RH). The laminate including the PET film and the fire-extinguishing material was covered with two barrier films and the barrier films were heat-sealed at the four sides thereof to seal the laminate therein. The heat-sealing conditions were 140°C for 2 seconds. This product was used as an evaluation sample.

<Evaluation of stability of properties>

The evaluation sample obtained was measured for the total light transmittance by a method in accordance with JIS K 7361-1, using a haze meter (manufactured by BYK-Gardner GmbH, BYK-Gardner Haze-Guard Plus). The measurement was performed before putting the evaluation sample in a constant temperature and humidity chamber (under the conditions of 85°C/85%RH) (before test) and after the lapse of 136 hours from the putting (after test). The barrier films had a total light transmittance of 95%. The measurement was performed three times at different locations, and the variation in total light transmittance between before and after the test at each of the locations was calculated in accordance with the following equation. Tables 1 and 2 show average values of the variation. When the fire-extinguishing material causes moisture absorption (deliquescence), the degree of transparency is increased. Therefore, by confirming the variation in the degree of transparency, the stability of properties was evaluated.

$$\text{Variation } \Delta = \text{Measured value after test - Measured value before test}$$

[Table 1]

| | Example 1-1 | Example 1-2 | Example 1-3 | Example 1-4 |
|---|---|---|---|---|
| Salt | Potassium citrate | Potassium citrate | Potassium citrate | Potassium citrate |
| Compound having acid anhydride group | X-12-1287A | X-12-1287A | X-12-1287A | X-12-1287A |
| Presence or absence of alkoxysilyl group in compound | Present | Present | Present | Present |
| Parts by mass of compound having acid anhydride group/parts by mass of binder resin | 60 | 100 | 200 | 100 |
| Variation Δ | 10.2 | 8.2 | 5.8 | 19.1 |

[Table 2]

| | Example 1-5 | Comparative Example 1-1 | Comparative Example 1-2 |
|---|---|---|---|
| Salt | Potassium citrate | Potassium citrate | Potassium citrate |
| Compound having acid anhydride group | AN-119 | - | - |
| Presence or absence of alkoxysilyl group in compound | Absent | Present | Absent |
| Parts by mass of compound having acid anhydride group/parts by mass of binder resin | 160 | 0 | 0 |
| Variation Δ | 44.0 | 61.7 | 69.8 |

(Examples 2-1 to 2-6 and Comparative Examples 2-1 and 2-2)

<Formation of fire-extinguishing material>

(Example 2-1)

The following components were mixed to prepare a fire-extinguishing material composition.

Fire-extinguishing agent: mixture (87.4 parts by mass) of potassium citrate and potassium chlorate

First binder: ether urethane resin (12.6 parts by mass)

Liquid medium: ethanol (87 parts by mass)

Liquid medium: isopropyl alcohol (27 parts by mass)

The mixture of potassium citrate and potassium chlorate was crushed in an agate mortar and then filtered with a No. 800-count mesh to adjust the particle size D50 to 8 to 12 μm.

The fire-extinguishing material composition was, using an applicator, applied onto one surface of a base material (trade name: E7002, manufactured by TOYOBO Co., Ltd.) made from polyethylene terephthalate (PET), the one surface having no release treatment performed thereon, so as to give an application thickness after drying of 150 μm, and then dried in an over set to 75°C for 7 minutes. Thereby, a sheet-shaped fire-extinguishing material was produced on the surface of the base material.

(Example 2-2)

A fire-extinguishing material composition was prepared in the same manner as in Example 2-1 except that 12.6 parts by mass of an acrylic resin was used in place of 12.6 parts by mass of the ether urethane resin, and 23 parts by mass of ethyl acetate was used as the liquid medium, in place of 27 parts by mass of the isopropyl alcohol, and a fire-extinguishing material was produced using this fire-extinguishing material composition.

(Example 2-3)

A fire-extinguishing material composition was prepared in the same manner as in Example 2-1 except that 12.6 parts by mass of a polyvinyl butyral (PVB) resin was used in place of 12.6 parts by mass of the ether urethane resin, and as the liquid medium, the amount of the ethanol was changed to 179 parts by mass and the amount of the isopropyl alcohol to 10 parts by mass, and a fire-extinguishing material was produced using this fire-extinguishing material composition.

(Example 2-4)

A fire-extinguishing material composition was prepared in the same manner as in Example 2-1 except that 8.4 parts by mass of a PVB resin was used in place of 12.6 parts by mass of the ether urethane resin, 4.2 parts by mass of X-12-1287A (trade name, manufactured by Shin-Etsu Chemical Co., Ltd.) was used as a second binder, and as the liquid medium, the amount of the ethanol was changed to 148 parts by mass and the amount of the isopropyl alcohol to 7 parts by mass, and a fire-extinguishing material was produced using this fire-extinguishing material composition.

(Example 2-5)

A fire-extinguishing material composition was prepared in the same manner as in Example 2-1 except that 12.6 parts by mass of a polymethyl vinyl ether (PMVE)/maleic anhydride copolymer (Gantrez AN-139 (manufactured by Ashland Japan Ltd.)) was used in place of 12.6 parts by mass of the ether urethane resin, and the amount of the ethanol was changed to 150 parts by mass and the amount of the isopropyl alcohol to 0 parts by mass, and a fire-extinguishing material was produced using this fire-extinguishing material composition.

(Example 2-6)

A fire-extinguishing material composition was prepared in the same manner as in Example 2-1 except that the amount of the ether urethane resin was changed from 12.6 parts by mass to 4.2 parts by mass, and 8.4 parts by mass of X-12-1287A was used as a second binder, and a fire-extinguishing material was produced using this fire-extinguishing

material composition.

(Comparative Example 2-1)

A fire-extinguishing material composition was prepared in the same manner as in Example 2-1 except that the amount of the ether urethane resin was changed from 12.6 parts by mass to 3.2 parts by mass, and 9.4 parts by mass of X-12-1287A was used as a second binder, and a fire-extinguishing material was produced using this fire-extinguishing material composition.

(Comparative Example 2-2)

A fire-extinguishing material composition was prepared in the same manner as in Example 2-1 except that 12.6 parts by mass of X-12-1287A was used in place of 12.6 parts by mass of the ether urethane resin, and a fire-extinguishing material was produced using this fire-extinguishing material composition.

<Measurement of weight change rate>

The first and second binders used in each of the examples and comparative examples were measured for the weight change rate obtained up to 400°C when the first and second binders are heated from 30°C to 500°C at a temperature increase rate of 5°C/min in an air atmosphere, using a differential thermogravimetric analyzer "STA7200RV" manufactured by Hitachi High-Tech Corporation. The sampling period in this measurement was set to 1 second. Tables 3 and 4 show measurement results. The term "weight reduction rate of mixture" in the tables means the weight reduction rate of the mixture of the first and second binders (Examples 2-4 and 2-6 and Comparative Example 2-1).

<Sealing of fire-extinguishing material>

A barrier film including a sealant layer (a L-LDPE (linear low-density polyethylene) resin, thickness: 30 μm) and a base material layer (a PET resin including a silica vapor deposition film, thickness: 12 μm) was prepared. The barrier film had a water vapor transmission rate of 0.2 to 0.6 $g/m^2$/day (under the conditions of 40°C/90%RH). The sheet-shaped fire-extinguishing material was covered with two barrier films and the barrier films were heat-sealed at the four sides thereof to seal the fire-extinguishing material therein. The heat-sealing conditions were 140°C for 2 seconds. This product was used as an evaluation sample.

<Test for fire-extinguishing properties>

An iron container having a length of 20 cm, a width of 30 cm, and a height of 40 cm was prepared. In order not to allow a solid fuel having been ignited to be extinguished by suffocation, an 8.5-mm-diameter circular vent was provided on the side surfaces of the container at five locations of height positions of 5 cm, 12.5 cm, 20.0 cm, 27.5 cm, and 35.0 cm from the top surface of the container. The fire-extinguishing material, having an area of 50 mm x 50 mm, was, with double sided tape, attached to the center of the top surface of the container. In the center of the bottom surface of the container, 1.5 g of a solid fuel (solid fuel fire-block ignition agent manufactured by CAPTAIN STAG) having a length of 15 mm, a width of 15 mm, and a height of 10 mm was placed.

While the distance between the solid fuel and the fire-extinguishing material was adjusted, the evaluation was performed on whether the fire-extinguishing material could extinguish a fire of the solid fuel, which had been ignited, within 180 seconds after the ignition. The evaluation was performed on the basis of the following criteria.

A: capable of extinguishing a fire when the distance from the fire-extinguishing material to the fire is 20 cm

B: capable of extinguishing a fire when the distance from the fire-extinguishing material to the fire is 10 cm

B: incapable of extinguishing a fire when the distance from the fire-extinguishing material to the fire is 10 cm

<Evaluation of deliquescent properties>

The evaluation sample obtained was measured for the total light transmittance by a method in accordance with JIS K 7361-1, using a haze meter (manufactured by BYK-Gardner GmbH, BYK-Gardner Haze-Guard Plus). The measurement was performed before putting the evaluation sample in a constant temperature and humidity chamber (under the conditions of 85°C/85%RH) (initial total light transmittance) and after the lapse of 24 hours from the putting (total

light transmittance after storage), and the variation Δ of the total light transmittance between before and after the storage was calculated in accordance with the following equation. When the fire-extinguishing material causes moisture absorption (deliquescence), the degree of transparency is increased. Therefore, by confirming the variation Δ in the degree of transparency, the degree of deliquescence was evaluated. The evaluation was performed on the basis of the following criteria.

Variation Δ = Value of total light transmittance after storage - Value of initial total light transmittance

A: variation Δ is 35 or less.

B: variation Δ is more than 35.

[Table 3]

| | | Example 2-1 | Example 2-2 | Example 2-3 | Example 2-4 |
|---|---|---|---|---|---|
| First binder | Type | Urethane | Acrylic | PVB | PVB |
| | Amount [parts by mass] | 12.6 | 12.6 | 12.6 | 8.4 |
| | Weight reduction rate | 88.0 | 76.3 | 54.1 | 54.1 |
| Second binder | Type | - | - | - | X-12-1287A |
| | Amount [parts by mass] | - | - | - | 4.2 |
| | Weight reduction rate | - | - | - | 11.8 |
| Mass ratio between first and second binders | | - | - | - | 2 : 1 |
| Weight reduction rate of mixture | | - | - | - | 46.2 |
| Fire-extinguishing ability | | A | A | A | B |
| Variation Δ | | B | B | B | A |

[Table 4]

| | | Example 2-5 | Example 2-6 | Comparative Example 2-1 | Comparative Example 2-2 |
|---|---|---|---|---|---|
| First binder | Type | PMVE/maleic anhydride copolymer | Urethane | Urethane | - |
| | Amount [parts by mass] | 12.6 | 4.2 | 3.2 | - |
| | Weight reduction rate | 60.3 | 88.0 | 88.0 | - |
| Second binder | Type | - | X-12-1287A | X-12-1287A | X-12-1287A |
| | Amount [parts by mass] | - | 8.4 | 9.4 | 12.6 |
| | Weight reduction rate | - | 11.8 | 11.8 | 11.8 |
| Mass ratio between first and second binders | | - | 1 : 2 | 1 : 3 | - |
| Weight reduction rate of mixture | | - | 32.1 | 15.7 | - |
| Fire-extinguishing ability | | A | B | C | C |
| Variation Δ | | A | A | A | A |

(Examples 3-1 to 3-12 and Comparative Examples 3-1 and 3-2)

(Example 3-1)

<Preparation of fire-extinguishing agent solution>

A fire-extinguishing agent, i.e., a mixture of potassium citrate and potassium chlorate was mixed with the same weight of ethanol, to produce the mixture. Thus, a fire-extinguishing agent solution was obtained.

<Preparation of binder resin solution>

Polyvinyl butyral as a binder resin was mixed with a mixed liquid of ethanol and isopropyl alcohol. Thus, a binder resin solution was obtained.

<Preparation of application solution>

The fire-extinguishing agent solution and binder resin solution prepared above were mixed with a following epoxy compound A as an additive. The calculated mixture ratio by weight of dried solid content therebetween was set so that the proportion by weight of solid content of the fire-extinguishing agent (hereinafter called "proportion of solid content of the fire-extinguishing agent) to the total of the fire-extinguishing agent, the binder resin, and the additive was 90 wt%. Thus, an application solution was obtained.

[Chemical Formula 2]

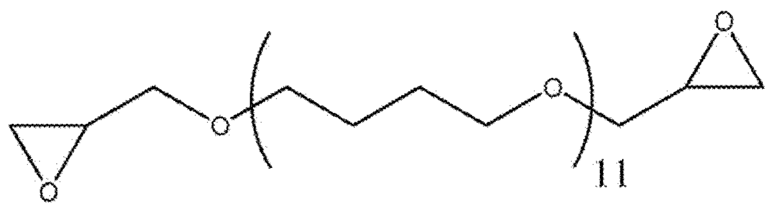

· · · A

A polyethylene terephthalate (PET) film having a silicone release treatment performed thereon was prepared. The application solution obtained above was applied onto the PET film, using an applicator with a gap set to 650 μm. This film was dried in an oven set to 75°C for 7 minutes. Thereafter, a coating film formed on the surface of the film was peeled, and a fire-extinguishing agent layer was thereby obtained. The thickness of this fire-extinguishing agent layer measured with "DIGIMICRO MU-501A" and "DIGIMICRO STAND MS-3G" manufactured by NIKON CORPORATION was 150 μm.

<Evaluation of flexibility>

The fire-extinguishing agent layer obtained was then left in a room-temperature general environment over one or more nights. Thereafter, a type 1 mandrel test was performed in a room-temperature general environment, in accordance with JIS K 5600-5-1. By performing the test starting with a mandrel having a larger diameter, the fire-extinguishing agent layer having undergone the test was visually inspected and checked for the presence or absence of cracking (breakage). As a result, no cracking was observed even in the test at a diameter of 2 mm.

<Evaluation of fire-extinguishing ability>

Two laminates were made each by bonding, using an adhesive, a LLDPE film as a resin layer with a silica vapor deposition film as a water vapor barrier layer. Next, the fire-extinguishing agent layer was cut out into a size of 10 mm x 10 mm. The fire-extinguishing agent layer was sandwiched between the two laminates, with the surfaces of the resin layers facing each other, to give a laminate. The laminate had all the surfaces thereof temporarily bonded by heat lamination, and then the four sides thereof sealed by a heat seal bar. Further, the laminate had one surface thereof bonded to a release film including a urethane adhesive layer. Thus, a fire-extinguishing material laminate illustrated in Fig. 3 was made.

A metal container including a glass plate as a bottom plate and having a volume of 139 x 109 x 30 mm was prepared. A vent hole was provided in a part of a side surface of this container. The fire-extinguishing material laminate made above had the release film peeled therefrom, and was attached to the center of the glass plate. Heptane (1.0 mL) was

placed in a Φ30-mm crucible, and ignited. The crucible was covered with the container and whether the fire-extinguishing material laminate extinguished the flame was observed. As a result, it was found that the fire-extinguishing material laminate extinguished the fire within 30 seconds.

(Example 3-2)

An application solution was prepared in the same manner as in Example 3-1 except that a following epoxy compound B was used as the additive, and a fire-extinguishing agent layer was obtained and evaluated for flexibility. The epoxy compound B was solid at ordinary temperature, and therefore heated in an oven set to 75°C for 10 minutes and thus made into a liquid, and then an application solution was prepared.

[Chemical Formula 3]

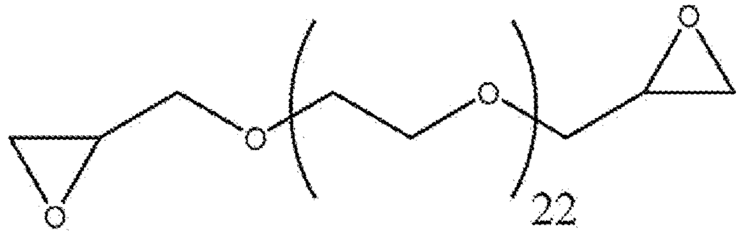

· · · B

As a result, no cracking was observed even in the test at a diameter of 2 mm.

<Example 3-3>

An application solution was prepared in the same manner as in Example 3-1 except that a following epoxy compound C was used as the additive, and a fire-extinguishing agent layer was obtained and evaluated for flexibility.

[Chemical Formula 4]

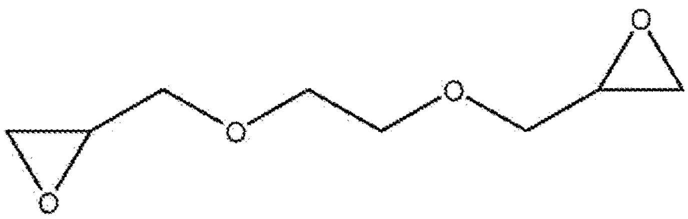

· · · C

As a result, no cracking was observed even in the test at a diameter of 2 mm.

<Examples 3-4 to 3-6>

An application solution was prepared by doubling the addition amount of the epoxy compound in each of Examples 3-1 to 3-3, and a fire-extinguishing agent layer was obtained and evaluated for flexibility. These tests are referred to as Examples 3-4 to 3-6, respectively. In all of Examples 3-4 to 3-6, the proportion of solid content of the fire-extinguishing agent was 86.4 wt%.

In the evaluation of the flexibility, none of Examples 3-4 to 3-6 had cracking observed even in the test with a diameter of 2 mm.

<Examples 3-7 to 3-9>

An application solution was prepared by reducing the addition amount of the epoxy compound to 0.5 times in each of Examples 3-1 to 3-3, and a fire-extinguishing agent layer was obtained and evaluated for the flexibility. These tests are referred to as Examples 3-7 to 3-9, respectively. In all of Examples 3-7 to 3-9, the proportion of solid content of the fire-extinguishing agent was 91.9 wt%.

In the evaluation of the flexibility, none of Examples 3-7 to 3-9 had cracking observed even in the test with a diameter of 2 mm.

<Examples 3-10 to 3-12>

An application solution was prepared by reducing the addition amount of the epoxy compound to 0.1 times in each of Examples 3-1 to 3-3, and a fire-extinguishing agent layer was obtained and evaluated for the flexibility. These tests are referred to as Examples 3-10 to 3-12, respectively. In all of Examples 3-10 to 3-12, the proportion of solid content of the fire-extinguishing agent was 93.4 wt%.

In the evaluation of the flexibility, none of Examples 3-10 to 3-12 had cracking observed even in the test with a diameter of 2 mm.

<Comparative Example 3-1>

An application solution was prepared in the same manner as in Example 3-1 except that the mixed amount of the fire-extinguishing agent solution was increased in the adjustment of the application solution so that the proportion of solid content of the fire-extinguishing agent was 99 wt%, and a fire-extinguishing agent layer was obtained and evaluated for flexibility. The fire-extinguishing agent layer was also evaluated for fire-extinguishing ability.

As a result, in the evaluation of the flexibility, the fire-extinguishing agent layer had a crack observed in the test with a diameter of 32 mm. In the evaluation of the fire-extinguishing ability, the fire-extinguishing agent layer extinguished the flame within 30 seconds.

<Comparative Example 3-2>

An application solution was prepared in the same manner as in Example 3-1 except that the mixed amount of the fire-extinguishing agent solution was reduced in the adjustment of the application solution so that the proportion of solid content of the fire-extinguishing agent was 50 wt%, and a fire-extinguishing agent layer was obtained and evaluated for flexibility. The fire-extinguishing agent layer was also evaluated for fire-extinguishing ability.

As a result, in the evaluation of the flexibility, the fire-extinguishing agent layer had no cracking observed even in the test with a diameter of 2 mm. In the evaluation of the fire-extinguishing ability, the fire-extinguishing agent layer did not extinguish the flame even after the lapse of 3 minutes.

[Industrial Applicability]

A fire-extinguishing material sheet according to the present disclosure can suitably be used particularly for members used for industrial materials such as a building and decorative material, a vehicle member, an aviation member, and an electronics member.

[Reference Signs List]

| | |
|---|---|
| 1 | Fire-extinguishing material |
| 2 | Base material |
| 3 | Fire-extinguishing material layer |
| 11 | Fire-extinguishing material sheet |
| 12 | Resin film |
| 13 | Fire-extinguishing agent layer |
| 14 | Resin layer |
| 15 | Adhesive layer |
| 16 | Water vapor barrier layer |
| 17 | Adhesive layer |
| 18 | Release film |
| 100 | Fire-extinguishing material laminate (fire-extinguishing material sheet) |

## Claims

**1.** A fire-extinguishing material composition comprising:

a fire-extinguishing agent containing at least one salt of a deliquescent organic salt or inorganic salt; and
a compound having an acid anhydride group.

2. The fire-extinguishing material composition according to claim 1, further comprising a binder resin.

3. The fire-extinguishing material composition according to claim 2, comprising 10 to 250 parts by mass of the compound, with a mass of the binder resin set to 100 parts by mass.

4. The fire-extinguishing material composition according to any one of claims 1 to 3, comprising 70 to 97 mass% of the fire-extinguishing agent on the basis of a total amount of the fire-extinguishing material composition.

5. The fire-extinguishing material composition according to any one of claims 1 to 4, wherein the acid anhydride group is a carboxylic anhydride group.

6. The fire-extinguishing material composition according to any one of claims 1 to 5, wherein the compound further has an alkoxysilyl group.

7. The fire-extinguishing material composition according to any one of claims 1 to 6, wherein the compound is a silane coupling agent.

8. The fire-extinguishing material composition according to any one of claims 1 to 7, wherein the salt is a potassium salt.

9. The fire-extinguishing material composition according to any one of claims 1 to 8, further comprising a liquid medium.

10. A fire-extinguishing material composition comprising: a fire-extinguishing agent containing at least one salt of an organic salt or an inorganic salt; and a binder resin, wherein
the binder resin has a weight reduction rate up to a temperature of 400°C of 30% or more when heated from 30°C to 500°C at a temperature increase rate of 5°C/min in thermogravimetric measurement in an air atmosphere.

11. A fire-extinguishing material composition comprising: a fire-extinguishing agent containing at least one salt of an organic salt or an inorganic salt; a first binder resin; and a second binder resin, wherein

the first binder resin has a weight reduction rate up to a temperature of 400°C of 50% or more when heated from 30°C to 500°C at a temperature increase rate of 5°C/min in thermogravimetric measurement in an air atmosphere,
the second binder resin has a weight reduction rate up to a temperature of 400°C of 15% or less when heated from 30°C to 500°C at a temperature increase rate of 5°C/min in thermogravimetric measurement in an air atmosphere, and
with a mass of the first binder resin taken as 100 parts, a mass of the second binder resin is 250 parts or less.

12. The fire-extinguishing material composition according to claim 11, wherein the second binder resin is a compound having an acid anhydride group.

13. The fire-extinguishing material composition according to claim 11 or 12, wherein the second binder resin is a silane coupling agent having a carboxylic anhydride group and an alkoxysilyl group.

14. A fire-extinguishing material composition comprising a fire-extinguishing agent, a binder resin, and an additive, wherein

a proportion by weight of solid content of the fire-extinguishing agent to a total of the fire-extinguishing agent, the binder resin, and the additive is 60 wt% to 98 wt%, and
when the fire-extinguishing material composition is formed into a sheet, a mandrel diameter of the sheet is 18 mm or less.

15. A method for selecting a binder resin to be used for a fire-extinguishing material composition containing: a fire-extinguishing agent containing at least one salt of an organic salt or an inorganic salt; and a binder resin, the method comprising:

a step of heating a binder resin to be evaluated from 30°C to 500°C at a temperature increase rate of 5°C/min in thermogravimetric measurement in an air atmosphere, and measuring a weight reduction rate up to a temperature of 400°C of the binder resin; and,
a step of determining a binder resin having a weight reduction rate of 30% or more as capable of preparing a fire-extinguishing material composition that exerts good initial fire-extinguishing properties.

**16.** A method for producing a fire-extinguishing material composition, the method comprising:

a step of preparing a binder resin determined, in the method according to claim 15, as capable of preparing a fire-extinguishing material composition that exerts good initial fire-extinguishing properties; and
a step of preparing a fire-extinguishing material composition containing the binder resin, and a fire-extinguishing agent containing at least one salt of an organic salt or an inorganic salt.

**17.** A fire-extinguishing material comprising the fire-extinguishing material composition according to any one of claims 1 to 13.

**18.** A device having an auto fire-extinguishing function, the device comprising the fire-extinguishing material according to claim 17.

**19.** A fire-extinguishing material sheet comprising a fire-extinguishing material layer containing a fire-extinguishing agent, a binder resin, and an additive, wherein
a proportion by weight of solid content of the fire-extinguishing agent to a total of the fire-extinguishing agent, the binder resin, and the additive is 60 wt% to 98 wt%.

**20.** The fire-extinguishing material sheet according to claim 19, wherein the binder resin contains at least one of a polyvinyl acetal resin or a polyvinyl alcohol resin.

**21.** The fire-extinguishing material sheet according to claim 19 or 20, wherein

the additive contains an epoxy compound, and
the epoxy compound is bi- or more-functional.

**22.** The fire-extinguishing material sheet according to any one of claims 19 to 21, wherein the fire-extinguishing agent contains a potassium salt.

**23.** The fire-extinguishing material sheet according to any one of claims 19 to 22, wherein the fire-extinguishing material layer has a thickness of 70 μm to 500 μm.

**24.** The fire-extinguishing material sheet according to any one of claims 19 to 23, wherein a mandrel diameter of the fire-extinguishing material layer is 18 mm or less.

**25.** The fire-extinguishing material sheet according to any one of claims 19 to 24, comprising a resin film on which the fire-extinguishing material layer is laminated.

FIG.1

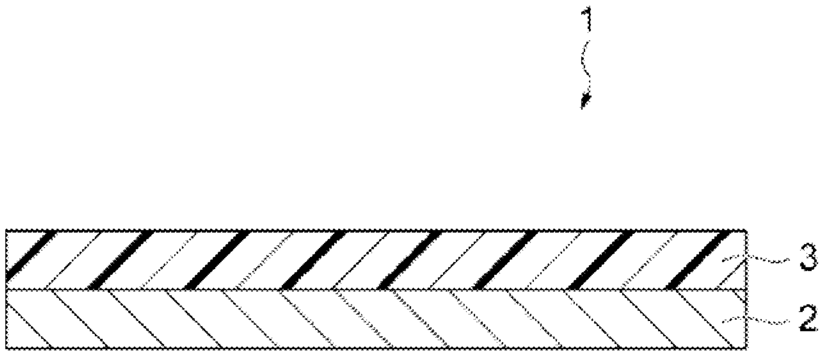

FIG.2

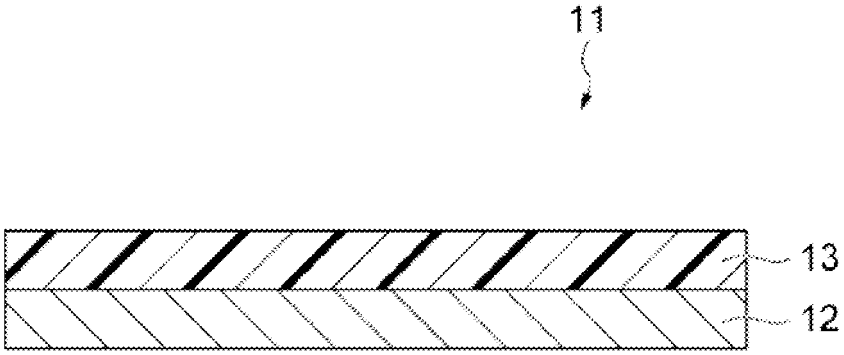

FIG.3

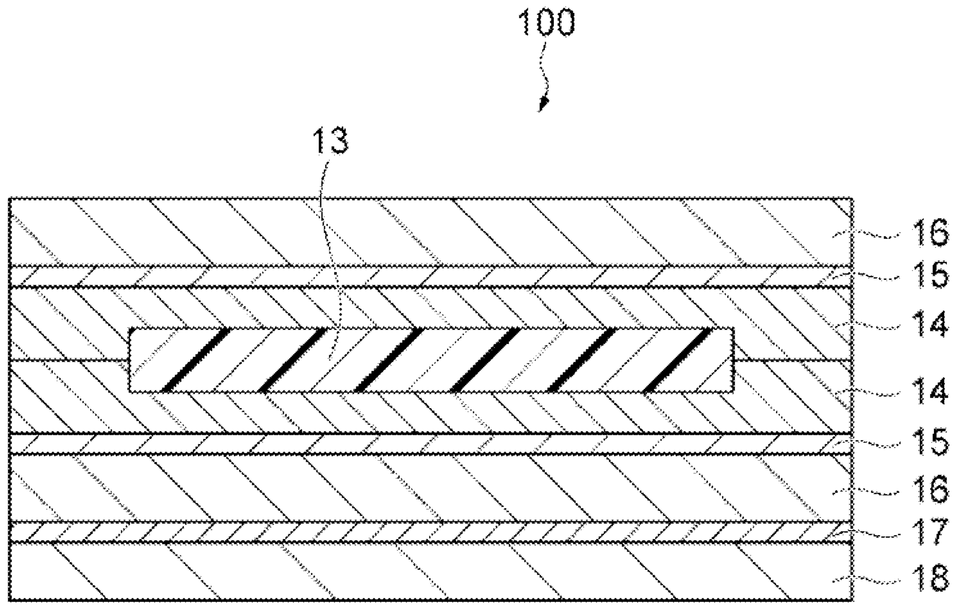

## INTERNATIONAL SEARCH REPORT

International application No.
**PCT/JP2023/020107**

### A. CLASSIFICATION OF SUBJECT MATTER

***C09K 21/00***(2006.01)i; ***A62C 3/16***(2006.01)i; ***A62D 1/00***(2006.01)i; ***A62D 1/06***(2006.01)i; ***B32B 27/18***(2006.01)i; ***C09D 5/18***(2006.01)i; ***C09D 7/60***(2018.01)i; ***C09D 7/63***(2018.01)i; ***C09D 129/04***(2006.01)i; ***C09D 129/14***(2006.01)i; ***C09D 201/00***(2006.01)i

FI: C09K21/00; A62D1/00; A62D1/06; B32B27/18 Z; C09D5/18; C09D7/60; C09D7/63; C09D129/04; C09D129/14; C09D201/00; A62C3/16 C

According to International Patent Classification (IPC) or to both national classification and IPC

### B. FIELDS SEARCHED

Minimum documentation searched (classification system followed by classification symbols)

A62C; C09K21

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X | US 2016/0332015 A1 (XI' AN WESTPEACE FIRE TECHNOLOGY CO., LTD.) 17 November 2016 (2016-11-17) paragraphs [0017]-[0020], table 3, components 14, 18, claims | 1-3, 5, 8-9, 17-18 |
| A | | 4, 6-7 |
| A | 工藤宗夫, シランカップリング剤および官能基含有アルコキシオリゴマー, 日本接着学会誌, 2009, 45(6), 236-241, DOI: 10.11618/adhesion.45.236 section 4.6, (KUDO, Muneo. Silane Coupling Agents and Alkoxy Oligomers which have Organic Groups. Journal of The Adhesion Society of Japan.) | 6-7, 12-13 |
| X | WO 2021/149766 A1 (YAMATO PROTEC CORPORATION) 29 July 2021 (2021-07-29) claims, paragraph [0010], examples | 10-11, 14, 17-20, 22-25 |
| A | | 12-13, 15-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/020107

C. DOCUMENTS CONSIDERED TO BE RELEVANT

| Category* | Citation of document, with indication, where appropriate, of the relevant passages | Relevant to claim No. |
|---|---|---|
| X<br>A | JP 2021-137346 A (TOPPAN PRINTING CO LTD) 16 September 2021 (2021-09-16) claims, paragraphs [0030]-[0033], examples | 10-11, 14, 17-19, 21-25<br>12-13, 15-16 |
| X<br>A | JP 2021-147942 A (TOPPAN PRINTING CO LTD) 27 September 2021 (2021-09-27) claims, paragraphs [0039]-[0042], examples | 10-11, 14, 17-19, 21-25<br>12-13, 15-16 |

Form PCT/ISA/210 (second sheet) (January 2015)

INTERNATIONAL SEARCH REPORT

International application No. PCT/JP2023/020107

**Box No. III Observations where unity of invention is lacking (Continuation of item 3 of first sheet)**

This International Searching Authority found multiple inventions in this international application, as follows:

(Invention 1) Claim 1-9 and claims 17 and 18 (referring to claims 1-9)

Claims 1-9 have the special technical feature of a "composition for fire extinguishing material comprising: a fire extinguishing agent containing at least one of an organic salt and an inorganic salt having deliquescent properties; and a compound having an acid anhydride group." and are thus classified as invention 1.

(Invention 2) Claim 10-13, 15-16, and claims 17 and 18 (referring to any of claims 10-13, and 15-16)

Claims 10-13 and 15-16 share, with claim 1 classified as invention 1, the common technical feature of a composition for a fire extinguishing agent comprising "a fire extinguishing agent containing at least one salt of an organic salt and an inorganic salt." However, said technical feature is well known in the art, does not make a contribution over the prior art, and thus it cannot be said that the technical feature is a special technical feature.

Thus, claims 10-13 and 15-16 cannot be classified as invention 1.

In addition, claims 10-13 and 15-16 have the special technical feature of a "composition for a fire extinguishing material comprising: a fire extinguishing agent containing at least one salt of an organic salt and an inorganic salt, and a binder resin, wherein a weight reduction rate is at least 30% in a specific thermogravimetric measurement." and are thus classified as invention 2.

(Invention 3) Claims 14, 19-25, and 17-18 (referring to claim 14)

Claims 14 and 19-25 share, with claim 1 classified as invention 1 and claim 2 classified as invention 2, the common technical feature of a composition for a fire extinguishing material comprising: "a fire extinguishing agent (and a binder resin)." However, said technical feature is well known in the art, does not make a contribution over the prior art, and thus it cannot be said that the technical feature is a special technical feature.

Therefore, claims 14, and 19-25 cannot be classified as invention 1 or 2.

Claims 14 and 19-25 have the special technical feature of a composition for an fire extinguishing material or a fire extinguishing material sheet "comprising a fire extinguishing agent, a binder resin, and an additive, wherein the weight ratio of the solid content of the fire extinguishing agent to the total weight of the solid content of the fire extinguishing agent, the binder resin, and the additive is 60 wt% to 98 wt%," and are thus classified as invention 3.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

**INTERNATIONAL SEARCH REPORT**
**Information on patent family members**

International application No.
**PCT/JP2023/020107**

| Patent document cited in search report | Publication date (day/month/year) | Patent family member(s) | Publication date (day/month/year) |
|---|---|---|---|
| US 2016/0332015 A1 | 17 November 2016 | GB 2538650 A<br>WO 2015/104004 A1<br>EP 3095488 A1<br>CN 103785130 A<br>MX 2016009171 A<br>BR 112016016194 A | |
| WO 2021/149766 A1 | 29 July 2021 | US 2023/0050941 A1<br>examples, claims<br>US 2023/0072183 A1<br>WO 2021/149758 A1<br>EP 4094809 A1<br>EP 4094810 A1<br>CN 115190817 A<br>KR 10-2022-0137917 A<br>TW 202136055 A<br>CN 115335125 A<br>KR 10-2022-0148173 A<br>JP 2021-118847 A | |
| JP 2021-137346 A | 16 September 2021 | (Family: none) | |
| JP 2021-147942 A | 27 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018047762 A
- JP 6443882 B
- JP H09276440 A
- JP 2015006302 A
- JP 2017080023 A
- JP 2020081809 A